# EUROPEAN PATENT APPLICATION

(11) **EP 4 654 555 A1**
(43) Date of publication of application: **26.11.2025**
(21) Application number: 25175807.4
(22) Date of filing: 12.05.2025
(51) Int. Cl.: H04L 67/02, H04L 12/18, H04L 67/55, H04W 36/00

(54) **SEAMLESS HANDOVER IN PUBLISH-SUBSCRIBE-AS-A-SERVICE**

(30) Priority: 21.05.2024 FI 20245647
(71) Applicant: Nokia Solutions and Networks Oy, 02610 Espoo (FI)
(72) Inventor: APICHARTTRISORN, Kittipat, Murray Hill (US); CHANG, Hyunseok, Holmdel (US); HAO, Fang, Morganville (US); MUKHERJEE, Sarit, Murray Hill (US)
(74) Representative: Nokia EPO representatives

(57) **Abstract**

Various example embodiments for supporting seamless handover in a publish-subscribe (pub-sub) architecture are presented herein. Various example embodiments for supporting seamless handover in pub-sub architecture may be configured to support seamless handover of pub-sub sessions in a pub-sub architecture implemented as a publish-subscribe-as-a-service (PSaaS) architecture in which pub-sub brokers are implemented using logically separated control functions (CFs) and data functions (DFs). Various example embodiments for supporting seamless handover in a PSaaS architecture may be configured to support seamless handover of pub-sub sessions between DFs in a PSaaS architecture. Various example embodiments for supporting seamless handover of pub-sub sessions between DFs in a PSaaS architecture may be configured to support seamless handover of pub-sub sessions between DFs in the PSaaS architecture based on use of message identifiers (MIDs) of messages on the pub-sub sessions to control seamless handover of pub-sub sessions between source DFs (SDFs) and target DFs (TDFs) in the PSaaS architecture.

## Description

### TECHNICAL FIELD

Various example embodiments relate generally to communication systems and, more particularly but not exclusively, to communication systems based on a publish-subscribe-as-a-service (PSaaS) architecture.

### BACKGROUND

Various communications technologies may be used to support communications in various types of communication systems.

### SUMMARY

In at least some example embodiments, an apparatus includes at least one processor and at least one memory including instructions which, when executed by the at least one processor, cause the apparatus at least to receive, by a serving data function of a publish-subscribe session from a target data function for the publish-subscribe session, an indication of a target message identifier (TMID) of the target data function for the publish-subscribe session, determine, by the serving data function, a source message identifier (SMID) of a last message of the publish-subscribe session that is sent by the serving data function for the publish-subscribe session before receipt of the indication of the TMID from the target data function, determine, by the serving data function based on the SMID and the TMID, a handover message identifier (HMID) indicative of a message of the publish-subscribe session from which the target data function is to begin streaming messages of the publish-subscribe session to a consumer publish-subscribe client for the publish-subscribe session, and send, by the serving data function toward the target data function, an indication of the HMID. In at least some example embodiments, a computer-readable storage medium stores computer program instructions which, when executed by an apparatus, cause the apparatus at least to receive, by a serving data function of a publish-subscribe session from a target data function for the publish-subscribe session, an indication of a target message identifier (TMID) of the target data function for the publish-subscribe session, determine, by the serving data function, a source message identifier (SMID) of a last message of the publish-subscribe session that is sent by the serving data function for the publish-subscribe session before receipt of the indication of the TMID from the target data function, determine, by the serving data function based on the SMID and the TMID, a handover message identifier (HMID) indicative of a message of the publish-subscribe session from which the target data function is to begin streaming messages of the publish-subscribe session to a consumer publish-subscribe client for the publish-subscribe session, and send, by the serving data function toward the target data function, an indication of the HMID. In at least some example embodiments, a method includes receiving, by a serving data function of a publish-subscribe session from a target data function for the publish-subscribe session, an indication of a target message identifier (TMID) of the target data function for the publish-subscribe session, determining, by the serving data function, a source message identifier (SMID) of a last message of the publish-subscribe session that is sent by the serving data function for the publish-subscribe session before receipt of the indication of the TMID from the target data function, determining, by the serving data function based on the SMID and the TMID, a handover message identifier (HMID) indicative of a message of the publish-subscribe session from which the target data function is to begin streaming messages of the publish-subscribe session to a consumer publish-subscribe client for the publish-subscribe session, and sending, by the serving data function toward the target data function, an indication of the HMID. In at least some example embodiments, an apparatus includes means for receiving, by a serving data function of a publish-subscribe session from a target data function for the publish-subscribe session, an indication of a target message identifier (TMID) of the target data function for the publish-subscribe session, means for determining, by the serving data function, a source message identifier (SMID) of a last message of the publish-subscribe session that is sent by the serving data function for the publish-subscribe session before receipt of the indication of the TMID from the target data function, means for determining, by the serving data function based on the SMID and the TMID, a handover message identifier (HMID) indicative of a message of the publish-subscribe session from which the target data function is to begin streaming messages of the publish-subscribe session to a consumer publish-subscribe client for the publish-subscribe session, and means for sending, by the serving data function toward the target data function, an indication of the HMID.

In at least some example embodiments, an apparatus includes at least one processor and at least one memory including instructions which, when executed by the at least one processor, cause the apparatus at least to receive, by a target data function for a publish-subscribe session from a serving data function of the publish-subscribe session, a handover request indicative of a request for handover of the publish-subscribe session from the serving data function to the target data function for a consumer publish-subscribe client, send, by the target data function toward the serving data function, an indication of a target message identifier (TMID) of the target data function for the publish-subscribe session, receive, by the target data function from the serving data function, an indication of a handover message identifier (HMID) indicative of a message of the publish-subscribe session from which the target data function is to begin streaming messages of the publish-subscribe session to the consumer publish-subscribe client, and stream, by the target data function toward the consumer publish-subscribe client starting from the HMID, messages of the publish-subscribe session. In at least some example embodiments, a computer-readable storage medium stores computer program instructions which, when executed by an apparatus, cause the apparatus at least to receive, by a target data function for a publish-subscribe session from a serving data function of the publish-subscribe session, a handover request indicative of a request for handover of the publish-subscribe session from the serving data function to the target data function for a consumer publish-subscribe client, send, by the target data function toward the serving data function, an indication of a target message identifier (TMID) of the target data function for the publish-subscribe session, receive, by the target data function from the serving data function, an indication of a handover message identifier (HMID) indicative of a message of the publish-subscribe session from which the target data function is to begin streaming messages of the publish-subscribe session to the consumer publish-subscribe client, and stream, by the target data function toward the consumer publish-subscribe client starting from the HMID, messages of the publish-subscribe session. In at least some example embodiments, a method includes receiving, by a target data function for a publish-subscribe session from a serving data function of the publish-subscribe session, a handover request indicative of a request for handover of the publish-subscribe session from the serving data function to the target data function for a consumer publish-subscribe client, sending, by the target data function toward the serving data function, an indication of a target message identifier (TMID) of the target data function for the publish-subscribe session, receiving, by the target data function from the serving data function, an indication of a handover message identifier (HMID) indicative of a message of the publish-subscribe session from which the target data function is to begin streaming messages of the publish-subscribe session to the consumer publish-subscribe client, and streaming, by the target data function toward the consumer publish-subscribe client starting from the HMID, messages of the publish-subscribe session. In at least some example embodiments, an apparatus includes means for receiving, by a target data function for a publish-subscribe session from a serving data function of the publish-subscribe session, a handover request indicative of a request for handover of the publish-subscribe session from the serving data function to the target data function for a consumer publish-subscribe client, means for sending, by the target data function toward the serving data function, an indication of a target message identifier (TMID) of the target data function for the publish-subscribe session, means for receiving, by the target data function from the serving data function, an indication of a handover message identifier (HMID) indicative of a message of the publish-subscribe session from which the target data function is to begin streaming messages of the publish-subscribe session to the consumer publish-subscribe client, and means for streaming, by the target data function toward the consumer publish-subscribe client starting from the HMID, messages of the publish-subscribe session.

In at least some example embodiments, an apparatus includes at least one processor and at least one memory including instructions which, when executed by the at least one processor, cause the apparatus at least to receive, by a serving data function of a publish-subscribe session from a target data function for the publish-subscribe session, an indication that the target data function is ready for handover of the publish-subscribe session from the serving data function to the target data function for a producer publish-subscribe client, determine, by the serving data function in response to the indication that the target data function is ready for handover and based on a quality-of-service level for the publish-subscribe session, a source message identifier (SMID), determine, by the serving data function based on the SMID, a handover message identifier (HMID) for handover of the publish-subscribe session from the serving data function to the target data function, and send, from the serving data function toward the target data function, an indication of the HMID for handover of the publish-subscribe session from the serving data function to the target data function. In at least some example embodiments, a computer-readable storage medium stores computer program instructions which, when executed by an apparatus, cause the apparatus at least to receive, by a serving data function of a publish-subscribe session from a target data function for the publish-subscribe session, an indication that the target data function is ready for handover of the publish-subscribe session from the serving data function to the target data function for a producer publish-subscribe client, determine, by the serving data function in response to the indication that the target data function is ready for handover and based on a quality-of-service level for the publish-subscribe session, a source message identifier (SMID), determine, by the serving data function based on the SMID, a handover message identifier (HMID) for handover of the publish-subscribe session from the serving data function to the target data function, and send, from the serving data function toward the target data function, an indication of the HMID for handover of the publish-subscribe session from the serving data function to the target data function. In at least some example embodiments, a method includes receiving, by a serving data function of a publish-subscribe session from a target data function for the publish-subscribe session, an indication that the target data function is ready for handover of the publish-subscribe session from the serving data function to the target data function for a producer publish-subscribe client, determining, by the serving data function in response to the indication that the target data function is ready for handover and based on a quality-of-service level for the publish-subscribe session, a source message identifier (SMID), determining, by the serving data function based on the SMID, a handover message identifier (HMID) for handover of the publish-subscribe session from the serving data function to the target data function, and sending, from the serving data function toward the target data function, an indication of the HMID for handover of the publish-subscribe session from the serving data function to the target data function. In at least some example embodiments, an apparatus includes means for receiving, by a serving data function of a publish-subscribe session from a target data function for the publish-subscribe session, an indication that the target data function is ready for handover of the publish-subscribe session from the serving data function to the target data function for a producer publish-subscribe client, means for determining, by the serving data function in response to the indication that the target data function is ready for handover and based on a quality-of-service level for the publish-subscribe session, a source message identifier (SMID), means for determining, by the serving data function based on the SMID, a handover message identifier (HMID) for handover of the publish-subscribe session from the serving data function to the target data function, and means for sending, from the serving data function toward the target data function, an indication of the HMID for handover of the publish-subscribe session from the serving data function to the target data function.

In at least some example embodiments, an apparatus includes at least one processor and at least one memory including instructions which, when executed by the at least one processor, cause the apparatus at least to receive, by a target data function for a publish-subscribe session from a serving data function of the publish-subscribe session, a handover request indicative of a request for handover of the publish-subscribe session from the serving data function to the target data function for a producer publish-subscribe client, receive, by the target data function from the serving data function, an indication of a handover message identifier (HMID) to be used by the target data function for a first message of the publish-subscribe session received by the target data function from the producer publish-subscribe client, and stream, by the target data function toward at least one downstream data function starting from HMID, messages of the publish-subscribe session. In at least some example embodiments, a computer-readable storage medium stores computer program instructions which, when executed by an apparatus, cause the apparatus at least to receive, by a target data function for a publish-subscribe session from a serving data function of the publish-subscribe session, a handover request indicative of a request for handover of the publish-subscribe session from the serving data function to the target data function for a producer publish-subscribe client, receive, by the target data function from the serving data function, an indication of a handover message identifier (HMID) to be used by the target data function for a first message of the publish-subscribe session received by the target data function from the producer publish-subscribe client, and stream, by the target data function toward at least one downstream data function starting from HMID, messages of the publish-subscribe session. In at least some example embodiments, a method includes receiving, by a target data function for a publish-subscribe session from a serving data function of the publish-subscribe session, a handover request indicative of a request for handover of the publish-subscribe session from the serving data function to the target data function for a producer publish-subscribe client, receiving, by the target data function from the serving data function, an indication of a handover message identifier (HMID) to be used by the target data function for a first message of the publish-subscribe session received by the target data function from the producer publish-subscribe client, and streaming, by the target data function toward at least one downstream data function starting from HMID, messages of the publish-subscribe session. In at least some example embodiments, an apparatus includes means for receiving, by a target data function for a publish-subscribe session from a serving data function of the publish-subscribe session, a handover request indicative of a request for handover of the publish-subscribe session from the serving data function to the target data function for a producer publish-subscribe client, means for receiving, by the target data function from the serving data function, an indication of a handover message identifier (HMID) to be used by the target data function for a first message of the publish-subscribe session received by the target data function from the producer publish-subscribe client, and means for streaming, by the target data function toward at least one downstream data function starting from HMID, messages of the publish-subscribe session.

### BRIEF DESCRIPTION OF THE DRAWINGS

The teachings herein can be readily understood by considering the following detailed description in conjunction with the accompanying drawings, in which:
FIG. 1 depicts an example embodiment of a publish-subscribe-as-a-service (PSaaS) architecture, for a publish-subscribe (pub-sub) paradigm, that is configured to support seamless handover of pub-sub sessions of pub-sub clients between data functions (DFs);
FIG. 2 depicts an example embodiment of a PSaaS system for illustrating handover of a pub-sub session from a serving data function (SDF) to a target data function (TDF);
FIG. 3 depicts an example embodiment of a PSaaS system configured to support use of a pub-sub session (PSS) layer, provided above a transport layer and below a pub-sub application layer, configured to support seamless handover of pub-sub sessions of pub-sub clients;
FIG. 4 depicts an example embodiment of a portion of a PSaaS system for illustrating two schemes for use of message identifiers to support message identification for supporting seamless handover of pub-sub sessions of pub-sub clients;
FIG. 5 depicts an example embodiment of a handover procedure for illustrating handover signaling and protocols for seamless handover of a consumer data function (consumer-DF), supporting a consumer pub-sub client using a make-before-break client connectivity mode, from an SDF to a TDF for a particular quality-of-service level (QoS-0) for the SDF-TDF handover and for a particular client-DF application QoS level (QoS-0) for client-DF message delivery;
FIG. 6 depicts an example embodiment of a handover procedure for illustrating handover signaling and protocols for seamless handover of a consumer data function (consumer-DF), supporting a consumer pub-sub client using a make-before-break client connectivity mode, from an SDF to a TDF for a particular quality-of-service level (QoS-1) for the SDF-TDF handover and for a particular client-DF application QoS level (QoS-1) for client-DF message delivery;
FIG. 7 depicts an example embodiment of a handover procedure for illustrating handover signaling and protocols for seamless handover of a consumer data function (consumer-DF), supporting a consumer pub-sub client using a make-before-break client connectivity mode, from an SDF to a TDF for a particular quality-of-service level (QoS-2) for the SDF-TDF handover and for a particular client-DF application QoS level (QoS-2) for client-DF message delivery;
FIG. 8 depicts an example embodiment of a handover procedure for illustrating handover signaling and protocols for seamless handover of a producer data function (producer-DF), supporting a producer pub-sub client using a make-before-break client connectivity mode, from an SDF to a TDF for a particular quality-of-service level (QoS-0) for the SDF-TDF handover and for a particular client-DF application QoS level (QoS-0) for client-DF message delivery;
FIG. 9 depicts an example embodiment of a handover procedure for illustrating handover signaling and protocols for seamless handover of a producer data function (producer-DF), supporting a producer pub-sub client using a make-before-break client connectivity mode, from an SDF to a TDF for a particular quality-of-service level (QoS-1) for the SDF-TDF handover and for a particular client-DF application QoS level (QoS-1) for client-DF message delivery;
FIG. 10 depicts an example embodiment of a handover procedure for illustrating handover signaling and protocols for seamless handover of a producer data function (producer-DF), supporting a producer pub-sub client using a make-before-break client connectivity mode, from an SDF to a TDF for a particular quality-of-service level (QoS-2) for the SDF-TDF handover and for a particular client-DF application QoS level (QoS-2) for client-DF message delivery;
FIG. 11 depicts an example embodiment of a PSaaS system configured to support use of a pub-sub session (PSS) layer, provided above a transport layer and below a pub-sub application layer, configured to support seamless handover of pub-sub sessions of pub-sub clients;
FIG. 12 depicts an example embodiment of a portion of a PSaaS system for illustrating a scheme for use of message identifiers to support message identification for supporting seamless handover of pub-sub sessions of pub-sub clients;
FIG. 13 depicts an example embodiment of pub-sub client connectivity modes including a make-before-break mode and a break-before-make mode;
FIG. 14 depicts an example embodiment of implementation of three QoS levels within the context of the Message Queuing Telemetry Transport (MQTT) protocol;
FIG. 15 depicts an example embodiment of a handover procedure for illustrating handover signaling and protocols for seamless handover of a consumer data function (consumer-DF), supporting a consumer pub-sub client using a make-before-break client connectivity mode, from an SDF to a TDF for a particular quality-of-service level (QoS-2) for the SDF-TDF handover and for each of the potential client-DF application QoS levels (QoS-0, QoS-1, QoS-2) for client-DF message delivery;
FIG. 16 depicts an example embodiment of a handover procedure for illustrating handover signaling and protocols for seamless handover of a producer data function (producer-DF), supporting a producer pub-sub client using a make-before-break client connectivity mode, from an SDF to a TDF for a particular quality-of-service level (QoS-2) for the SDF-TDF handover and for each of the potential client-DF application QoS levels (QoS-0, QoS-1, QoS-2) for client-DF message delivery;
FIG. 17 depicts an example embodiment of a handover procedure for illustrating handover signaling and protocols for seamless handover of a consumer data function (consumer-DF), supporting a consumer pub-sub client using a break-before-make client connectivity mode, from an SDF to a TDF for a particular quality-of-service level (QoS-2) for the SDF-TDF handover and for each of the potential client-DF application QoS levels (QoS-0, QoS-1, QoS-2) for client-DF message delivery;
FIG. 18 depicts an example embodiment of a handover procedure for illustrating handover signaling and protocols for seamless handover of a producer data function (producer-DF), supporting a producer pub-sub client using a break-before-make client connectivity mode, from an SDF to a TDF for a particular quality-of-service level (QoS-2) for the SDF-TDF handover and for each of the potential client-DF application QoS levels (QoS-0, QoS-1, QoS-2) for client-DF message delivery;
FIG. 19 depicts an example embodiment of a method for use by an SDF to support handover of a consumer pub-sub client from the SDF to a TDF;
FIG. 20 depicts an example embodiment of a method for use by a TDF to support handover of a consumer pub-sub client from an SDF to the TDF;
FIG. 21 depicts an example embodiment of a method for use by an SDF to support handover of a producer pub-sub client from the SDF to a TDF;
FIG. 22 depicts an example embodiment of a method for use by a TDF to support handover of a producer pub-sub client from an SDF to the TDF; and
FIG. 23 depicts an example embodiment of a computer suitable for use in performing various functions presented herein.

To facilitate understanding, identical reference numerals have been used herein, wherever possible, in order to designate identical elements that are common among the various figures.

### DETAILED DESCRIPTION

Various example embodiments for supporting seamless handover in a publish-subscribe (pub-sub) architecture are presented herein. Various example embodiments for supporting seamless handover in pub-sub architecture may be configured to support seamless handover of pub-sub sessions in a pub-sub architecture implemented as a publish-subscribe-as-a-service (PSaaS) architecture in which pub-sub brokers are implemented using logically separated control functions (CFs) and data functions (DFs). Various example embodiments for supporting seamless handover in a PSaaS architecture may be configured to support seamless handover of pub-sub sessions between DFs in a PSaaS architecture. Various example embodiments for supporting seamless handover of pub-sub sessions between DFs in a PSaaS architecture may be configured to support seamless handover of pub-sub sessions between DFs in the PSaaS architecture based on use of message identifiers (MIDs) of messages on the pub-sub sessions to control seamless handover of pub-sub sessions between source DFs (SDFs) and target DFs (TDFs) in the PSaaS architecture. Various example embodiments for supporting seamless handover of pub-sub sessions between DFs in a PSaaS architecture based on use of MIDs of messages of the pub-sub sessions may be configured to use MIDs to determine and control handover demarcation points for different pub-sub client types (e.g., consumer pub-sub clients and producer pub-sub clients) which may operate using different pub-sub client connectivity modes (e.g., make-before-break and break-before-make) and for different quality-of-service (QoS) levels which may be supported for pub-sub systems (e.g., QoS-0 ("at most once") in which messages may be lost but never re-delivered, QoS-1 ("at least once") in which messages are never lost but may be re-delivered, and QoS-2 ("exactly once") in which each message is delivered once and only once). Various example embodiments for supporting seamless handover of pub-sub sessions between DFs in a PSaaS architecture may be configured to support seamless handover of pub-sub sessions between DFs in the PSaaS architecture while reducing (or even minimizing or eliminating) message loss, while reducing (or even minimizing or eliminating) message duplication, while reducing (or even minimizing) the migration interval duration, and so forth. It will be appreciated that various example embodiments for supporting seamless handover in a PSaaS architecture may be further understood by first considering various aspects of the PSaaS architecture.

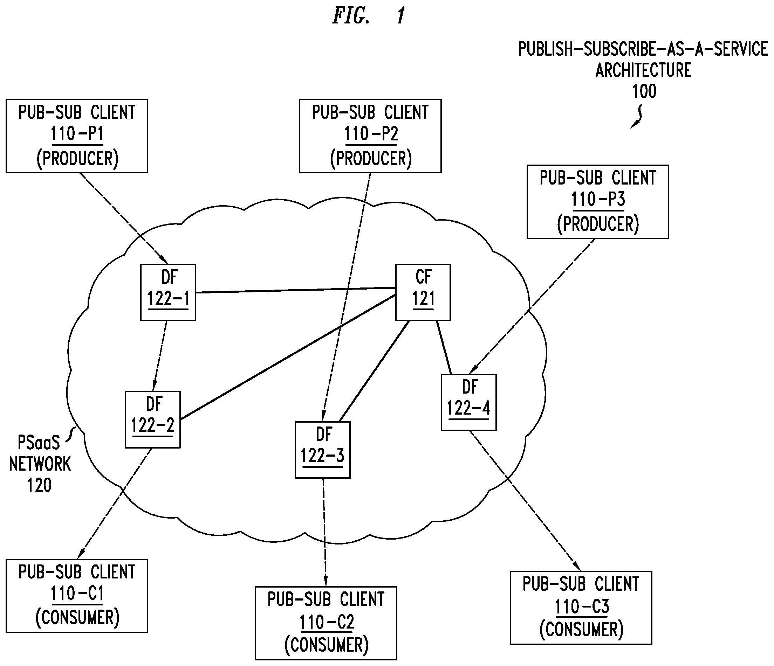

FIG. 1 depicts an example embodiment of a publish-subscribe-as-a-service (PSaaS) architecture, for a publish-subscribe (pub-sub) paradigm, that is configured to support seamless handover of pub-sub sessions of pub-sub clients between data functions (DFs).

The PSaaS architecture 100 is a pub-sub architecture supporting the pub-sub paradigm, which is a paradigm for content distribution that supports distribution of content from one or more producers of the content (often referred to as content publishers or, more generally, publishers) to one or more consumers of the content (often referred to as content subscribers or, more generally, subscribers) using pub-sub sessions supporting delivery of the content from the producers to the consumers. A pub-sub architecture may support one-to-many distribution (e.g., distribution of content from one producer to many consumers), many-to-one distribution (e.g., distribution of content from many producers to one consumer), or many-to-many distribution (e.g., distribution of content from many producers to many consumers). It will be appreciated that the content producers (publishers) and content consumers (subscribers) may be referred to more generally as pub-sub clients (i.e., clients of the pub-sub system) when the roles in which they are operating are not necessarily relevant to the context. In FIG. 1, examples of producer pub-sub clients and consumer pub-sub clients are illustrated as producers 110-P1 - 110-P3 (collectively, producers 110-P) and consumers 110-C1 - 110-C3 (collectively, consumers 110-C), which may be referred to collectively as pub-sub clients 110.

The PSaaS architecture 100 is based on logical separation of the control plane functions and data plane functions of legacy pub-sub brokers which typically facilitate establishment and use of pub-sub sessions by pub-sub clients. In the PSaaS architecture 100, the control plane functions and the data plane functions of a legacy pub-sub broker are separated into individual logical entities in the form of a control function (CF) and a data function (DF), respectively, and the pub-sub client interfaces of the pub-sub clients are extended to support interaction by the pub-sub clients with the separated CF and DF elements. The pub-sub-client interfaces of the pub-sub clients may be configured to support interaction by the pub-sub clients with the CF using pub-sub control sessions and with the DF using pub-sub data sessions, and may be further configured to enable the pub-sub clients to support appropriate DF selection at pub-sub session setup and to allow for subsequent DF reselection within the active pub-sub session as conditions change (e.g., pub-sub client needs, pub-sub client locations, content types, network conditions, or the like, as well as various combinations thereof). In FIG. 1, examples of such logically separated CF and DF elements are illustrated as being part of a PSaaS network 120 including a CF 121 supporting a set of DFs 122-1 - 122-4 (collectively, DFs 122).

The PSaaS architecture 100, as indicated above, is based on logical separation of the control and data plane operations of a pub-sub broker into the CF and DF elements which are configured to support the pub-sub events and pub-sub data distribution, respectively. As illustrated in FIG. 1, architecturally, the CF 121 is logically centralized, while the DFs 122 can be distributed in the network as cloud-resident software network functions. The PSaaS architecture 100 also supports addition of two new functionalities into pub-sub systems: namely, Service Selection and Service Migration. Service Selection allows a pub-sub client 110 to initially connect to the most appropriate DF 122 for the content, while Service Migration allows the pub-sub client 110 to connect to a new DF 122 within an active pub-sub session (i.e., without disconnecting from the pub-sub session). The PSaaS architecture 100, in order to support the Service Selection and Service Migration functionalities, also supports two new actions (or pub-sub related verbs or actions) for a pub-sub system: (1) a "Connect" action, which is invoked by a pub-sub client 110 to initiate a pub-sub session with the CF 121 and/or a DF 122 and (2) a "Redirect" action, which is invoked by the CF 121 and directed to a pub-sub client 110 (either directly or indirectly via the DF 122 to which the pub-sub client 110 is connected) to ask the pub-sub client 110 to connect to a named DF 122.

The PSaaS architecture 100, as indicated above, is configured to support a Service Selection capability that allows a pub-sub client 110 to initially connect to the most appropriate DF 122 for the content and a Service Migration capability that allows the pub-sub client 110 to connect to a new DF 122 within an active pub-sub session (i.e., without disconnecting from the pub-sub session). With Service Migration, a pub-sub client 110 can switch the underlying connection (e.g., Transmission Control Protocol (TCP) and/or Hypertext Transfer Protocol (HTTP) connection) from one DF 122 to another DF 122 while maintaining the pub-sub session that is running atop the underlying connection such that the pub-sub session remains active during the switching of the underlying connection. The migration can be initiated by the CF 121 to the pub-sub client 110 directly or can be initiated by the CF 121 to the pub-sub client 110 indirectly via the DF 122. Within the context of such a handover, unless indicated otherwise, the DF 122 with which the pub-sub client 110 currently has an active pub-sub session is referred to as the Serving DF (SDF) and the DF 122 to which the pub-sub session is being migrated is referred to as the Target DF (TDF). As discussed further below, the migration of a pub-sub session may be supported in various ways, including based on a make-before-break process that relies on data duplication, a break-before-make process that may result in data loss, and a seamless handover capability configured to support seamless handovers in a manner that reduces or minimizes data loss and reduces or eliminates data duplication.

The PSaaS architecture 100, as indicated above, may support migration of an active pub-sub session of a pub-sub client 110 from an SDF 122 to a TDF 122 using a make-before-break process. Here, assume that, while the pub-sub client 110 has an active pub-sub session with the SDF 122 that is supporting a pub-sub data stream, the pub-sub client 110 receives a "Redirect" message from the CF 121 (directly or via the SDF 122). The pub-sub client 110, based on the Redirect message, "Connects" the pub-sub session to the TDF 122 (which is indicated in the Redirect message) and continues with its active pub-sub session via the TDF 122, and then disconnects from the SDF 122 afterwards. It will be appreciated that, during the time between the completion of setting up a new connection to the TDF 122 and the disconnection from the SDF 122, the pub-sub client 110 is maintaining two connections and, thus, data can be duplicated to both connections regardless of whether the pub-sub client 110 is a publisher or a subscriber. Various example embodiments presented herein may support a seamless handover capability that enables pub-sub clients 110 to use such a make-before-break client connectivity mode while overcoming various potential drawbacks of using such a make-before-break client connectivity mode during handover (e.g., data duplication), thereby enabling the Service Migration function to be supported with reduced or even minimized (potentially eliminated) data duplication.

The PSaaS architecture 100, as indicated above, may support migration of an active pub-sub session of a pub-sub client 110 from an SDF 122 to a TDF 122 using a break-before-make process. Here, assume that, while the pub-sub client 110 has an active pub-sub session with the SDF 122 that is supporting a pub-sub data stream, the pub-sub client 110 receives a "Redirect" message from the CF 121 (directly or via the SDF 122). The pub-sub client 110, based on the Redirect message, disconnects its TCP (or HTTP) connection with the SDF 122, "Connects" the pub-sub session to the TDF 122 (which is indicated in the Redirect message), and continues with its active pub-sub session via the TDF 122. It will be appreciated that, during the time between the disconnection from the SDF 122 and the completion of setting up a new connection to the TDF 122, the pub-sub client 110 does not have any connection to any DF 122 while the pub-sub session is still active and, thus, any data sent by the pub-sub application during this time will be lost regardless of whether the data originated from the pub-sub client 110 (i.e., publisher or producer) or terminated to the pub-sub client 110 (i.e., subscriber or consumer). Various example embodiments presented herein may support a seamless handover capability that enables pub-sub clients 110 to use such a break-before-make client connectivity mode while overcoming various potential drawbacks of using such a break-before-make client connectivity mode during handover (e.g., data loss), thereby enabling the Service Migration function to be supported with reduced or even minimized (potentially eliminated) data loss.

The PSaaS architecture 100, as indicated above, may support migration of an active pub-sub session of a pub-sub client 110 from an SDF 122 to a TDF 122 based on various example embodiments for supporting seamless handover of an active pub-sub session from an SDF 122 to a TDF 122, as presented herein. The migration of an active pub-sub session of a pub-sub client 110 from an SDF 122 to a TDF 122 may be performed in a manner for while reducing (or even minimizing or eliminating) data duplication which typically results when a make-before-break process is used, reducing (or even minimizing or eliminating) message loss which typically results when a break-before-make process is used, reducing (or even minimizing) the migration interval duration, and so forth. In other words, the migration of an active pub-sub session of a pub-sub client 110 from an SDF 122 to a TDF 122 may be performed while supporting loss-free, non-duplicate message delivery during pub-sub client migration, even where content is continuously being generated by producer pub-sub clients 110-P and consumed by consumer pub-sub clients 110-C.

The PSaaS architecture 100 may be configured to support massive scale, immense dynamism, and extreme diversity. For example, massive scale may refer to support for handling a large number of pub-sub clients and the associated pub-sub sessions of those pub-sub clients. For example, immense dynamism may refer to dynamism in terms of the numbers of pub-sub clients in the pub-sub system, dynamism in terms of the locations from which the pub-sub clients join the pub-sub system (including movements relative to the network), dynamism in terms of the length of time for which the pub-sub clients remain active within the pub-sub system (e.g., relatively long or short durations, widely variable durations, and so forth), or the like, as well as various combinations thereof. For example, extreme diversity may refer to diversity in terms of the types of content being delivered, diversity in terms of the protocols being used for content delivery, diversity in terms of traffic characteristics of traffic transporting content, diversity in terms of fan-out characteristics of various groups of pub-sub clients within the pub-sub system (e.g., unicast versus multicast), diversity in terms of the requirements of the pub-sub data streams (e.g., bandwidth requirements, latency guarantees, and so forth), or the like, as well as various combinations thereof.

The PSaaS architecture 100 may be configured to support distribution of content between pub-sub clients in various contexts. For example, the PSaaS architecture 100 may be configured to support communications between pub-sub clients in order to support communications of communication service provider networks (e.g., supporting communications in cellular communication networks, such as in Fifth Generation (5G) cellular networks and Sixth Generation (6G) cellular networks, or various other types of service provider communication networks), communications for Industrial Internet contexts (e.g., Industrial Internet of Things (IIoT) or other Industrial Internet applications which may be used for inventory management, manufacturing management, energy management, or the like), communications in massive sensing contexts (e.g., asset management, inventory optimization, health monitoring, wearable connectivity, control of smart environments, or the like), or the like, as well as various combinations thereof. It will be appreciated that the PSaaS architecture 100 may be utilized within various other contexts in which the pub-sub paradigm may be utilized to support distribution of content.

It will be appreciated that the PSaaS architecture 100, although primarily presented with respect to specific numbers and arrangements of pub-sub clients 110 and functions (namely, CFs 121 and DFs 122), may include various other numbers and/or arrangements of pub-sub clients 110 and functions (namely, CFs 121 and DFs 122).

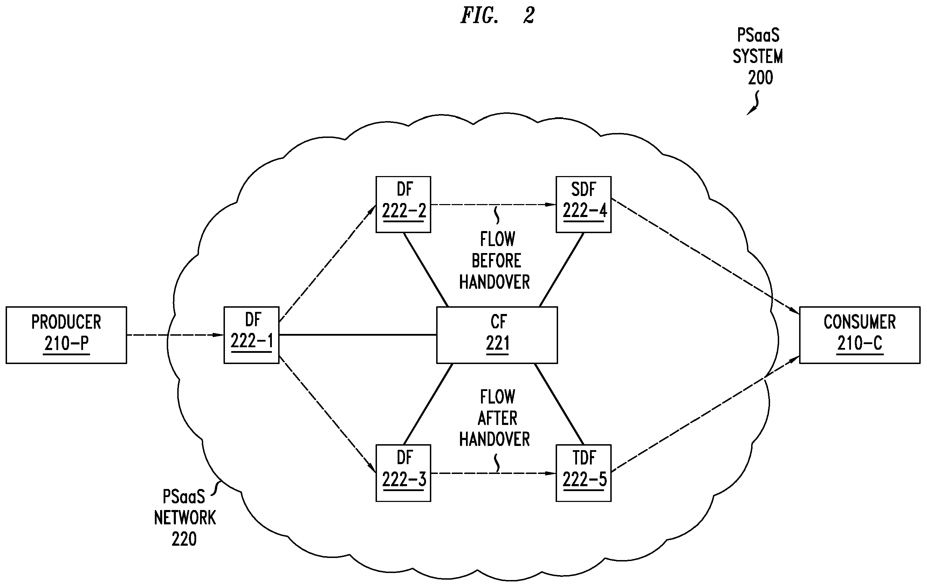

FIG. 2 depicts an example embodiment of a PSaaS system for illustrating handover of a pub-sub session from a serving data function (SDF) to a target data function (TDF).

The PSaaS system 200 includes a pair of pub-sub clients 210 and a PSaaS network 220. The pub-sub clients 210 include a producer pub-sub client (denoted as producer 210-P) and a consumer pub-sub client (denoted as consumer 210-C). The PSaaS network 220 includes a set of pub-sub functions that includes a CF 221 and a set of DFs 222-1 - 222-5 (collectively, DFs 222). The PSaaS system 200 supports a pub-sub session from the producer 210-P to the consumer 210-C via the PSaaS network 220.

The pub-sub clients 210 are configured to participate in a pub-sub system for supporting communication of pub-sub content from the producer of the pub-sub content (e.g., the producer 210-P) to the consumer of the pub-sub content (e.g., the consumer 210-C). The pub-sub clients 210 may include various types of clients which may operate within a pub-sub system, which may vary for different contexts in which the pub-sub system may be deployed. For example, the pub-sub clients 210 may include network functions (NFs) where the pub-sub system is used within the context of a service provider network (e.g., NFs of a Fifth Generation (5G) cellular network, NFs of a Sixth Generation (6G) cellular network, or the like). For example, the pub-sub clients 210 may include a field instrument and a workstation where the pub-sub system is used within the context of an Industrial Internet environment. For example, the pub-sub clients 210 may include a sensor and a controller where the pub-sub system is used within the context of a massive sensing environment. It will be appreciated that the pub-sub clients 210 may include various other types of endpoints depending on the context in which the pub-sub system is deployed.

The PSaaS network 220 (namely, the set of pub-sub functions that includes the CF 221 and the DFs 222) is configured to support communication of pub-sub content from the producer 210-P to the consumer 210-C, including establishment and use of pub-sub sessions which may be used to support communication of pub-sub content from the producer 210-P to the consumer 210-C. The pub-sub functions are logically separated such that each of the pub-sub clients 210 communicates with each of the CF 221 and the DFs 222 independently using separate pub-sub sessions, respectively, as opposed to the case of a legacy pub-sub broker in which the pub-sub control functions and pub-sub data functions are logically combined in the legacy pub-sub broker such that each pub-sub client supports only a single pub-sub session to the legacy pub-sub broker (such that pub-sub control and data communications of a pub-sub client are constrained to be over a single pub-sub session). Namely, based on the separation of the control plane functions and data plane functions in the form of the CF 221 and the DFs 222, the producer 210-P and the consumer 210-C may support respective pub-sub control sessions to the CF 221 and support respective pub-sub data sessions to the DFs 222). It is noted that references herein to pub-sub sessions are references to pub-sub data sessions unless indicated otherwise.

The CF 221 is configured to support establishment and management of pub-sub sessions for the pub-sub clients 210. The CF 221 is configured to support management of various events associated with establishment and management of pub-sub sessions for the pub-sub clients 210 (e.g., pub-sub client joins/leaves, pub-sub client authentication, or the like). The CF 221 is configured to support configuration of the DFs 222 for dissemination of pub-sub content (e.g., exchange creation/deletion, queue binding/unbinding, or the like). It will be appreciated that the DFs 222 may be configured to support various other functions typically provided by a control plane of a legacy pub-sub broker in a pub-sub system. The CF 221 is configured to support establishment of the pub-sub control sessions with the pub-sub clients 210 for purposes of supporting establishment and management of pub-sub data sessions for use by the pub-sub clients 210 to support communication of pub-sub content in a pub-sub system.

The DFs 222 are configured to support establishment and use of pub-sub data sessions used for communications between the pub-sub clients 210, including supporting propagation of pub-sub content between the pub-sub clients 210 via pub-sub sessions. The DFs 222 are configured to provide various functions for supporting propagation of pub-sub content between the pub-sub clients 210 via pub-sub sessions (e.g., data ingress/egress, data buffering, data filtering, and so forth). It will be appreciated that the DFs 222 may be configured to support various other functions typically provided by a data plane of a legacy pub-sub broker in a pub-sub system. The DFs 222 are configured to support establishment of the pub-sub data sessions with the pub-sub clients 210 for use by the pub-sub clients 210 to support communication of pub-sub content in a pub-sub system.

The PSaaS network 220 is configured to support dynamic control over association of the pub-sub clients 210 with the DFs 222 for supporting pub-sub communications for the pub-sub clients 210. The PSaaS network 220 is configured to support dynamic DF selection for the pub-sub clients 210 (including initial DF selection based on initial conditions and subsequent DF reselection as conditions change), thereby ensuring that, at any given time, each pub-sub client 210 supports communication of pub-sub content via a pub-sub data session established with the DF 222 that is best-suited to support the pub-sub client 210. More specifically, the PSaaS network 220 is configured to allow for appropriate DF selection at pub-sub session setup of a pub-sub client 210 and to allow for subsequent DF reselection within the active pub-sub session of the pub-sub client 210 as conditions change (e.g., changes in one or more of pub-sub client needs, pub-sub client locations, content types being distributed, network conditions of the underlying network supporting pub-sub content distribution, or the like, as well as various combinations thereof). The PSaaS network 220 is configured to support a service selection function that performs initial DF selection for a pub-sub client 210 and a service migration function that performs DF migration for a pub-sub client 210, the combination of which may be referred to herein as PSaaS. It will be appreciated that the PSaaS network 220 may be configured to support various other functions for supporting communication of pub-sub content between pub-sub clients 210 via the PSaaS network 220.

As further depicted in FIG. 2 and discussed further below, the PSaaS system 200 supports a seamless handover of the pub-sub session from the DF 222-4 (which is the SDF) to the DF 222-5 (which is the TDF), such that the path of the pub-sub session from the producer 210-P to the consumer 210-C changes from a first path including the SDF 222-4 (producer 210 → DF 222-1 → DF 222-2 → SDF 222-4 → consumer 210-C) to a second path including the TDF 222-5 (producer 210 → DF 222-1 → DF 222-3 → SDF 222-5 → consumer 210-C). Here, the CF 222 may determine the need for the handover (e.g., based on a determination that SDF 222-4 is impacted), determine specifics of the handover (e.g., determining that the producer 210 and the consumer 210-C are impacted and selecting the TDF 222-5 for handover), and initiate signaling for triggering the handover, such that the flow changes from the first path to the second path.

As discussed further below, this handover of the pub-sub session may be performed for different pub-sub client types (e.g., consumer pub-sub clients and producer pub-sub clients) which may operate using different pub-sub client connectivity modes (e.g., make-before-break and break-before-make) and for different quality-of-service (QoS) levels which may be supported for pub-sub systems (e.g., QoS-0 ("at most once") in which messages may be lost but never re-delivered, QoS-1 ("at least once") in which messages are never lost but may be re-delivered, and QoS-2 ("exactly once") in which each message is delivered once and only once). Herein, the QoS levels may be applied for supporting particular QoS levels within particular contexts within the pub-sub system, including (1) on the client-DF communication path, in which case the QoS may be referred to as client-DF application QoS, for providing guarantees for message delivery from client to DF or DF to client (e.g., as defined in existing pub-sub protocols like MQTT) and (2) for DF handovers, in which case the QoS may be referred to as SDF-TDF handover QoS, which means that handover from an SDF to a TDF may introduce message loss (QoS-0) or message duplication (QoS-1) or neither of these (QoS-2).

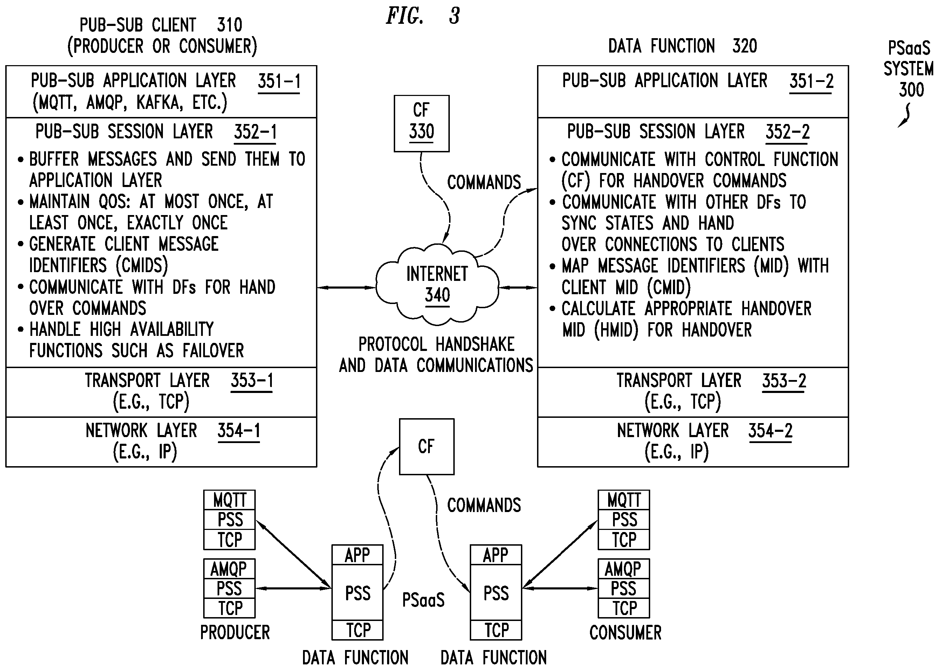

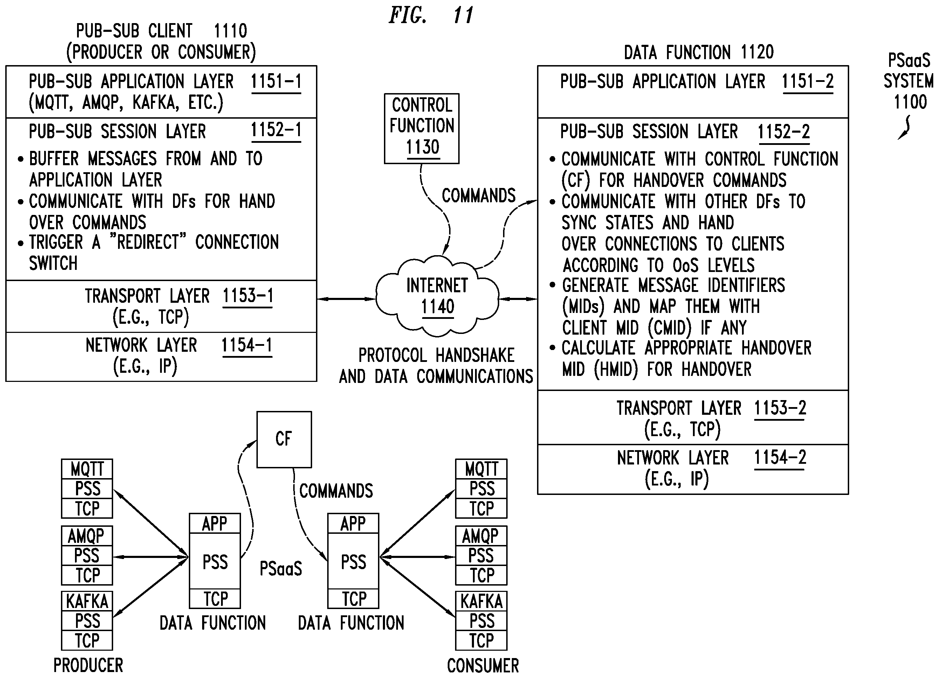

Various example embodiments may be configured to support seamless handover of pub-sub sessions between DFs based on handover signaling capabilities in which each of the three QoS levels supported by the pub-sub clients are handled differently for consumer pub-sub clients and producer pub-sub clients. It will be appreciated that such example embodiments are presented with respect to FIGs. 3 - 10. It will be appreciated that at least some such embodiments may be used within the context of certain example embodiments presented with respect to FIGs. 11 - 18.

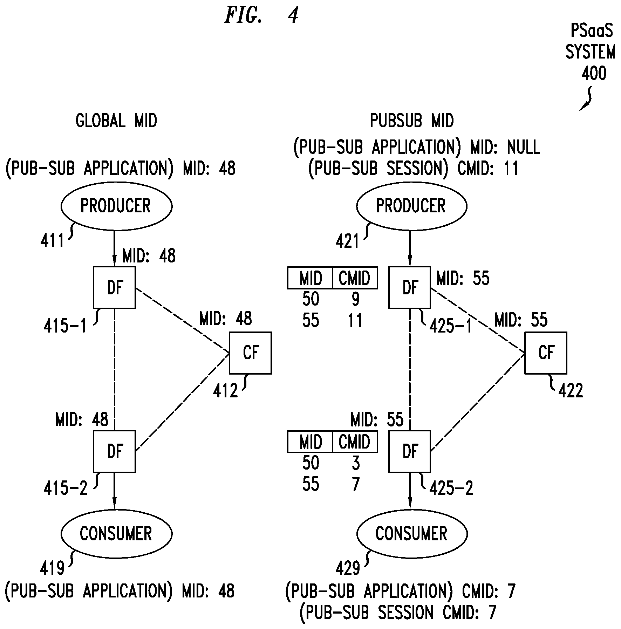

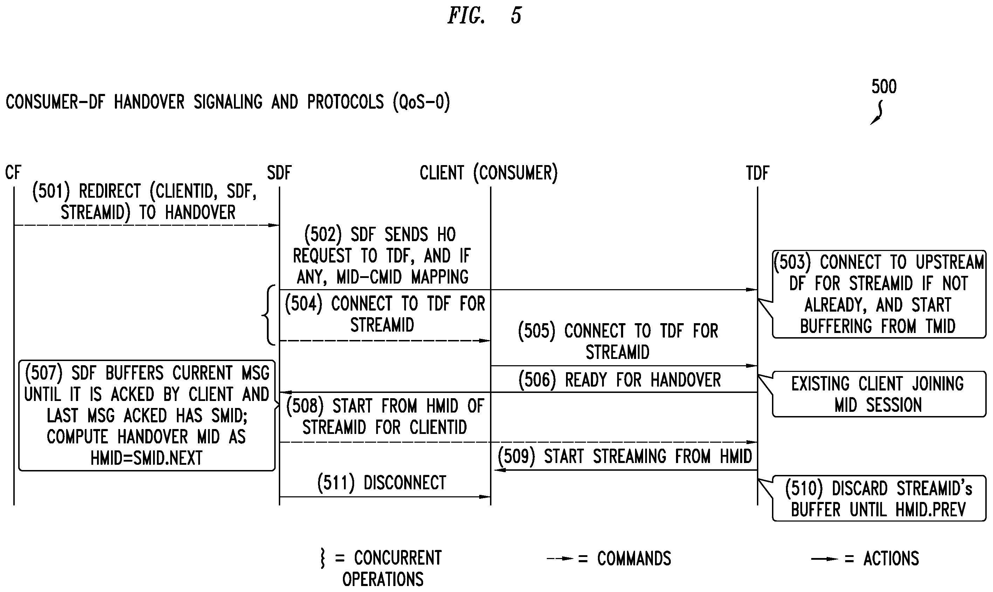

Various example embodiments for supporting seamless handover of pub-sub sessions between DFs, based on handover signaling capabilities in which each of the three QoS levels supported by the pub-sub clients are handled differently for consumer pub-sub clients and producer pub-sub clients, may be configured to support various capabilities. These example embodiments may provide handover schemes for pub-sub session handover of a pub-sub client across DFs. These example embodiments may provide schemes that consider multiple QoS levels (at most once, at least once, or exactly once) supported by various pub-sub protocols available today and also make the handover independent of the pub-sub protocol used by the pub-sub client. These example embodiments may provide handover protocols that are configured such that, during a handover, the pub-sub client does not lose any content (partially or in its entirety within a message). These example embodiments may provide handover protocols such that duplicate messages can be reduced, minimized, or even avoided during handover. These example embodiments may provide handover protocols such that the handover duration, which is the elapsed time from a handover request to handover completion, is reduced or even minimized. These example embodiments may provide protocols that perform DF handover on demand at any time without a standby, backup DF. These example embodiments may provide protocols that can handover DFs with in-memory data without data storage replication or storage sharing among DFs. These example embodiments may provide protocols that do not assume complete control of the client behaviors (e.g., producers may or may not generate message identifiers or consumers may acknowledge every message individually or cumulatively). These example embodiments may be based on a pub-sub session (PSS) layer as presented with respect to FIG. 3, use of message identifiers as presented with respect to FIG. 4, use of handover signaling and protocols as presented with respect to FIGs. 5 - 10, or the like, as well as various combinations thereof.

FIG. 3 depicts an example embodiment of a PSaaS system configured to support use of a pub-sub session (PSS) layer, provided above a transport layer and below a pub-sub application layer, configured to support seamless handover of pub-sub sessions of pub-sub clients.

As illustrated in FIG. 3, the PSaaS system 300 includes a pub-sub client 310 (which may be a producer or a consumer), a data function (DF) 320, a Control Function (CF) 330, and the Internet 340. The pub-sub client 310, the DF 320, and the CF 330 are each communicatively connected to the Internet 340. The pub-sub client 310 and the DF 320 are configured to communicate via the Internet 340 for data communications. The CF 330 is configured to communicate with the DF 320 via the Internet 340 for providing various control commands to the DF 320. The pub-sub client 310 and the DF 320 each support communications based on a protocol stack that includes, among other layers which have been omitted for purposes of clarity, a pub-sub application layer 351 (depicted as pub-sub application layer 351-1 on the pub-sub client 310 and pub-sub application layer 351-2 on the DF 320), a Pub-Sub Session (PSS) layer 352 (depicted as PSS layer 352-1 on the pub-sub client 310 and PSS layer 352-2 on the DF 320) below the pub-sub application layer 351, a transport layer 353 (depicted as transport layer 353-1 on the pub-sub client 310 and transport layer 353-2 on the DF 320) below the PSS layer 352, and a network layer 354 (pub-sub application layer 351-1 on the pub-sub client 310 and pub-sub application layer 351-2 on the DF 320) below the transport layer 353. It will be appreciated that other layers may be supported within the protocol stacks of the various components.

The pub-sub application layer 351 is the application layer on which the pub-sub sessions are based. The pub-sub application layer 351 may be based on various pub-sub protocols. For example, the pub-sub application layer 351 may be based on MQTT, AMQP, Kafka, or the like, as well as various combinations thereof. It will be appreciated that various other pub-sub protocols may be utilized at the pub-sub application layer 351.

The PSS layer 352 may be configured to support various functions. The PSS layer 352 may be configured to support communications of different pub-sub applications (e.g., MQTT, AMQP, Kafka, or the like) used by different pub-sub clients such as pub-sub client 310. The PSS layer 352 may be configured to enforce handover protocols, ensure a QoS level specified by the pub-sub application, manage message identifiers (MIDs) used for supporting seamless handover functions, or the like, as well as various combinations thereof. The PSS layer 352 enables these functionalities at the pub-sub client 310 by establishing communications with CFs and DFs (illustratively, the CF 330 and the DF 320) for coordinating handover operations without notifying pub-sub applications (e.g., continue an existing pub-sub application session). For example, ActiveMQ running at a consumer client does not need to call any methods or handle any callbacks when the consumer-DF is being handed over.

The PSS layer 352-1 at the pub-sub client 310 is configured to support various functions at the pub-sub client 310, such as buffering of messages and sending them to the pub-sub application layer 351-1 to maintain the specified QoS (e.g., at most once, at least once, or exactly once), handling and/or generating MIDs used to support seamless handover functions (e.g., if the pub-sub application generates MIDs at a producer client then the PSS layer 352-1 would utilize these MIDs; otherwise, the PSS layer 352-1 would insert MIDs on the producer side and remove MIDs on the consumer side), supporting communications with the CF 330 (e.g., directly or indirectly through an SDF) for handover commands, handle high availability functions such as failover, or the like, as well as various combinations thereof. It will be appreciated that the PSS layer 352-1 at the pub-sub client 310 may be configured to support various other functions at the pub-sub client 310.

The PSS layer 352-2 at the DF 320 is configured to support various functions at the DF 320, such as supporting communications with the CF 330 for handover commands, supporting communications with other DFs to synchronize states and support handover of connections to pub-sub clients (e.g., the PSS layer at the SDF communicates with the PSS layer at the TDF to synchronize state and support handover of connections to pub-sub clients), supporting use of MIDs used to support seamless handover functions (e.g., mapping MIDs with client MIDs (CMIDs), calculating appropriate handover MIDs (HMIDs) for seamless handover, or the like, as well as various combinations thereof), transferring message buffers to other DFs during handovers if needed, or the like, as well as various combinations thereof. It will be appreciated that the PSS layer 352-2 at the DF 320 may be configured to support various other functions at the DF 320.

The lower protocol stack layers which function below the PSS layer 352, including the transport layer 353 and the network layer 354 may be configured to support communications of the pub-sub application layer 351 based on the intervening PSS layer 352. For example, the transport layer 353 may be implemented using Transmission Control Protocol (TCP) and/or any other transport layer protocols suitable for supporting pub-sub communications in a pub-sub context. For example, the network layer 354 may be implemented using Internet Protocol (IP) and/or any other network layer protocol(s) suitable for supporting pub-sub communications in a pub-sub context. It will be appreciated that various other lower protocol stack layers may be utilized for supporting communications of the pub-sub application layer 351 based on the intervening PSS layer 352.

It will be appreciated that the PSS layer 352 may be configured to support various other functions for supporting seamless handover of pub-sub sessions of pub-sub clients.

FIG. 4 depicts an example embodiment of a portion of a PSaaS system for illustrating two schemes for use of message identifiers to support message identification for supporting seamless handover of pub-sub sessions of pub-sub clients.

The PSaaS system 400 may be configured to support message identifier generation and de-generation. In order for pub-sub handover to achieve minimal message loss or message duplication during handovers, the PSaaS network needs to be able to detect duplicate messages or determine if one message is generated after another. MID generation is typical for existing pub-sub protocols and implementations as available in AMQP implementations such as ActiveMQ or Rabbit MQ, and also in Kafka protocols. However, various handover protocols presented herein provide additional mechanisms to facilitate handover. First, if pub-sub data from a producer is a continuous stream or very large data chunks without explicit message boundaries, the handover protocols can break it down to insert MIDs appropriately. Second, some pub-sub applications may not generate MIDs and, in this case, the handover protocols can generate internal MIDs and then remove these internal MIDs before delivering the messages to a client consumer to protect the privacy of the client producer. The MIDs are useful for handover operations because they assist PSaaS systems in (1) detecting duplicate messages and (2) leveraging message orders for handover. Here, unless indicated otherwise, MIDs are assumed to be unique among messages and increasing from an older message to a newer message. Here, as illustrated in FIG. 4, the two schemes for message identification include: (1) global message identification and (2) pub-sub message identification.

As indicated above and illustrated in FIG. 4, global message identification may be used for message identification which may be used to support handovers within a PSaaS system. In order to detect message duplication or maintain message ordering, the pub-sub application at the producer may generate a unique and increasing MID for every message it produces. This MID, which is referred to as the global MID, is embedded with the message itself (e.g. as a field in the message data structure) and is forwarded together with the message from the producer, through a number of DFs, and finally to the consumers. It is noted that DFs and CFs need to be able to read MIDs from encrypted or un-encrypted messages for proper message management within the pub-sub systems.

In the PSaaS system 400 of FIG. 4, global message identification is illustrated to the left. This portion of the PSaaS system 400 includes a producer 411 and a consumer 419 which perform pub-sub communications via a PSaaS network including a pair of DFs 415-1 and 415-2 supported by a CF 412. In this example, a global MID (MID = 48) is used on the pub-sub clients, as well as on the DFs and CF within the PSaaS network. Namely, a sub-sub application on the producer 411 generates a global MID (in this example, MID = 48) which is included in messages sent by the producer 411. The messages are sent by the producer 411 to the consumer 419 via the PSaaS network. More specifically, the messages are sent by the producer 411 to the consumer 419 via the DF 415-1 and the DF 415-2. This global MID of 48 is also recognized by the CF 412 providing control functions for the DF 415-1 and the DF 415-2. In this manner, the MID = 48 is truly a global MID supported throughout the PSaaS system 400.

As indicated above and illustrated in FIG. 4, pub-sub message identification may be used for message identification which may be used to support handovers within a PSaaS system. In case the pub-sub application on the producer does not generate MIDs or is sending a continuous stream or very large data chunks without explicit message boundaries, the following operation steps based on sub-sub MIDs may be performed: (1) the PSS layer at the producer client intercepts the message or data chunk in a stream and inserts within the message or data chunk a unique and increasing client MID (cMID) where the cMID is unique and increasing within a scope of the producer and the producer-DF, (2) the producer-DF then creates a mapping between this cMID and a pub-sub MID (MID) that can be used by all the DFs and CFs in the PSaaS network for assisting in handover operations, and this MID is attached to the message being forwarded within the PSaaS network until the consumer-DF, (3) the consumer-DF, after receiving a message with the MID, generates another cMID that is unique and increasing within a scope of the consumer-DF and the consumer, and then creates another mapping between this cMID and the MID, and (4) the consumer-DF removes the MID from the message or data chunk and attaches the cMID to the message or data chunk before sending the message or data chunk to the consumer, and (5) the PSS layer at the consumer client intercepts the message or data chunk and forward it to the application layer of the consumer client.

In the PSaaS system 400 of FIG. 4, pub-sub message identification is illustrated to the right. This portion of the PSaaS system 400 includes a producer 421 and a consumer 429 which perform pub-sub communications via a PSaaS network including a pair of DFs 425-1 and 425-2 supported by a CF 422. Namely, the sub-sub application on the producer 421 sends a message without adding global MID to the message (in this example, MID = null at the producer 421), but the PSS layer at the producer 421 intercepts the message and inserts a cMID = 11 into the message.

As indicated above, handover signaling and protocols may be configured to support seamless handover of pub-sub sessions between DFs in a PSaaS network.

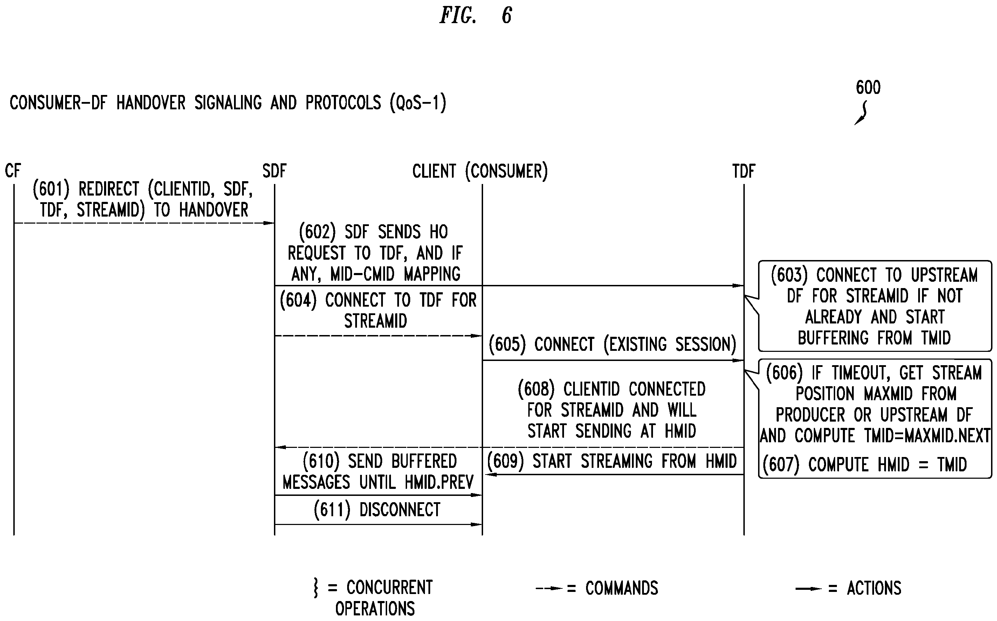

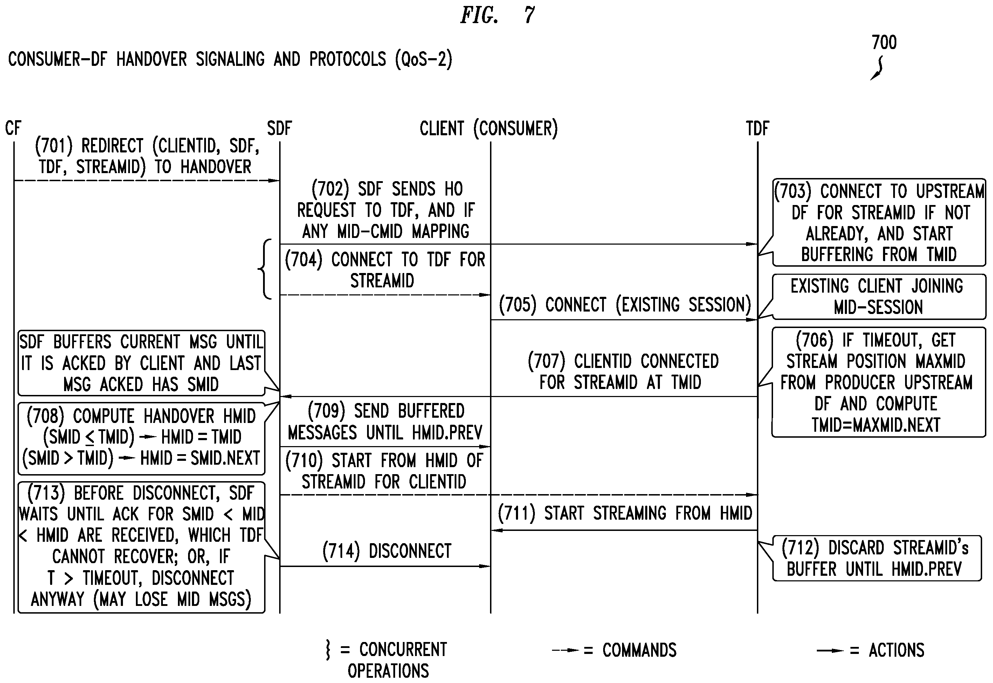

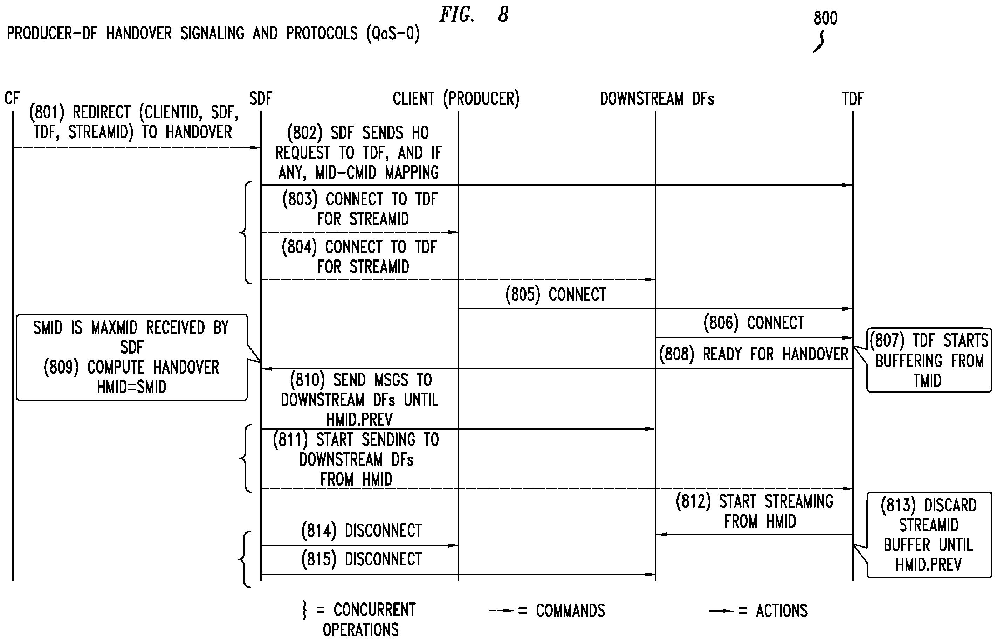

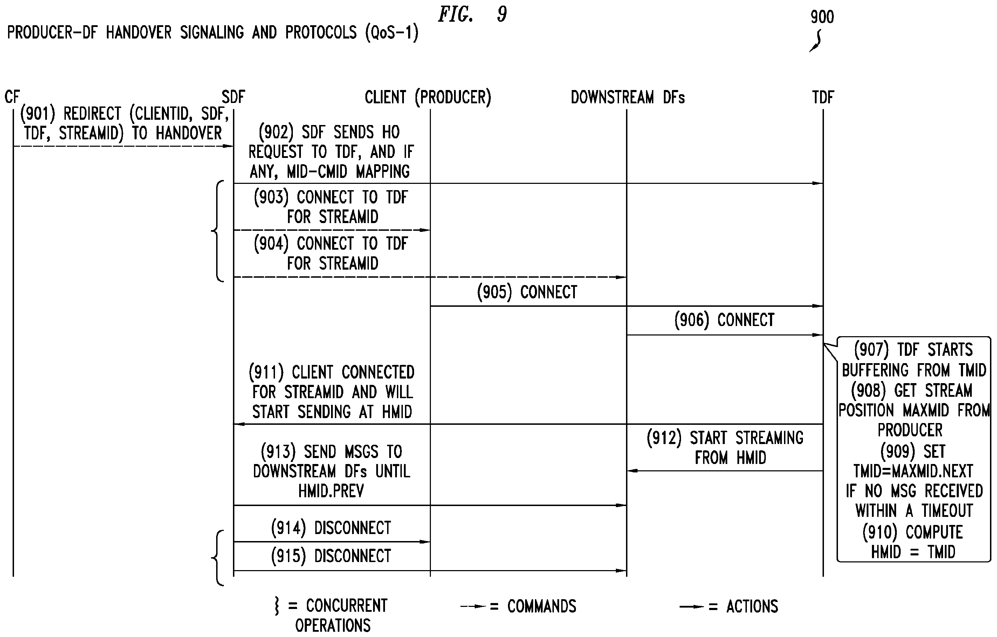

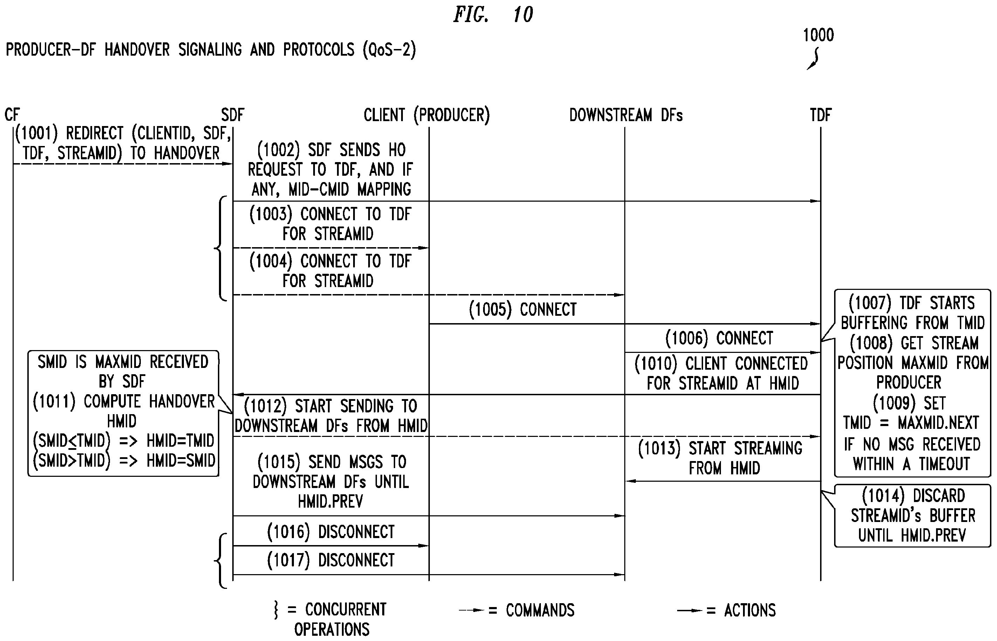

The handover signaling and protocols may be configured to support the three QoS levels typically supported by pub-sub applications, and may be different for those QoS levels. Namely, the handover signaling and protocols may be configured to support the three QoS levels typically supported by pub-sub applications as follows: (a) QoS-0 ("at most once") in which messages may be lost but never re-delivered, (b) QoS-1 ("at least once") in which messages are never lost but may be re-delivered, and (c) QoS-2 ("exactly once") in which each message is delivered once and only once. In pub-sub applications, none of the QoS levels explicitly enforces in-order message delivery. It is noted that handover signaling and protocols for supporting QoS-0 (for both SDF-TDF handover and client-DF application layer message exchange) are presented with respect to FIG. 5 (for consumer-DFs) and FIG. 8 (for producer-DFs), handover signaling and protocols for supporting QoS-1 (for both SDF-TDF handover and client-DF application layer message exchange) are presented with respect to FIG. 6 (for consumer-DFs) and FIG. 9 (for producer-DFs), and handover signaling and protocols for supporting QoS-2 (for both SDF-TDF handover and client-DF application layer message exchange) are presented with respect to FIG. 7 (for consumer-DFs) and FIG. 10 (for producer-DFs). It is noted that, here, references to consumer-DFs are references to DFs supporting a consumer pub-sub client and references to producer-DFs are references to DFs supporting a producer pub-sub client.

The handover signaling and protocols may be different for consumer-DFs and producer-DFs. The consumer-DFs and producer-DFs use different handover signaling and protocols because the latter (handing over the root) involves downstream DFs in addition to the pub-sub client, whereas, for the consumer-DF, the handover is a handover of the leaf nodes. Within the handover of the same DF function, the handover behaviors differ between QoS levels. At a high level, QoS-2 incurs the most complex protocol (the greatest number of signaling steps) because it has to consider state information from both the SDF and the TDF in order to make an informed decision for a handover boundary, whereas, for QoS-0 or QoS-1, the SDF or the TDF can arbitrate a handover boundary to avoid message duplication or message losses, respectively. It is noted that handover signaling and protocols for supporting handover of consumer-DFs are presented with respect to FIG. 5 (for QoS-0 in the SDF-TDF handover), FIG. 6 (for QoS-1 in the SDF-TDF handover), and FIG. 7 (for QoS-2 in the SDF-TDF handover), whereas handover signaling and protocols for supporting handover of producer-DFs are presented with respect to FIG. 8 (for QoS-0 in the SDF-TDF handover), FIG. 9 (for QoS-1 in the SDF-TDF handover), and FIG. 10 (for QoS-2 in the SDF-TDF handover). It is noted that, here, again, references to consumer-DFs are references to DFs supporting a consumer pub-sub client and references to producer-DFs are references to DFs supporting a producer pub-sub client. It is noted that, for these handover procedures, the term MID.NEXT is used to suggest "any" message that comes after MID, without the need to know a specific message for MID.NEXT (which is possible based on the assumptions that MID is both unique and incremented by the operators to check a pair of messages if (1) they are the same or (2) a message comes before or after another).

FIG. 5 depicts an example embodiment of a handover procedure for illustrating handover signaling and protocols for seamless handover of a consumer data function (consumer-DF), supporting a consumer pub-sub client using a make-before-break client connectivity mode, from an SDF to a TDF for a particular quality-of-service level (QoS-0) for the SDF-TDF handover and for a particular client-DF application QoS level (QoS-0) for client-DF message delivery.

As illustrated in FIG. 5, various functions of the handover signaling and protocols supported within the context of the handover procedure 500 are supported by a consumer pub-sub client for which a pub-sub session is being migrated, the SDF from which the pub-sub session is being migrated, the TDF to which the pub-sub session is being migrated, and the CF associated with the SDF and the TDF. For SDF-TDF handover for QoS-0 in the consumer-DF context, in order to avoid sending duplicate messages to the consumer pub-sub client, the TDF needs to know the last message that the SDF has sent; however, for this QoS level, the handover does not need to prevent message losses. The handover procedure 500 includes the following operational steps.

At step 501, the CF issues a Redirect command (for handover) to the SDF for the stream of the consumer pub-sub client for which the handover is to be performed. The Redirect command includes the client identifier (ClientID) of the consumer pub-sub client, the stream identifier (StreamID) of the stream, and an indication of the SDF which is currently being used by the stream for the consumer pub-sub client (i.e., source of the handover) and an indication of the TDF to which the stream for the consumer pub-sub client is being migrated (i.e., target of the handover). It will be appreciated that the Redirect command may include other information which may be used to support the handover procedure 500.

At step 502, the SDF, after receiving the Redirect command from the CF, sends a handover (HO) Request to the TDF. The SDF identifies the TDF, to which to send the HO Request, from the Redirect command received from the CF. The HO Request includes the stream identifier (StreamID) of the stream for which the handover is requested, which is obtained from the Redirect command. The HO Request, in the case of pub-sub message identification, also may include a mapping between MID and cMID.

At step 503, the TDF, after receiving the HO Request from the SDF, if not already connected to the upstream DF which is handling the stream, connects to the upstream DF which is handling the stream. The TDF identifies the upstream DF which is handling the stream from the stream identifier (StreamID) which is included in the HO Request from the SDF. The TDF, once connected to the upstream DF which is handling the stream, starts buffering messages from MID = TMID. In other words, here TMID represents the MID of the first message buffered by the TDF once the TDF connects to the upstream DF which is handling the stream.

At step 504, the SDF sends a command to the consumer pub-sub client (specified by the ClientID in the Redirect message received from the CF) to instruct the consumer pub-sub client to connect to the TDF for the stream (specified by the StreamID in the Redirect message received from the CF). This command includes the stream identifier (StreamID) of the stream for which the consumer pub-sub client is to connect to the TDF, as well as the identifier of the TDF to which the consumer pub-sub client is to connect for the handover for the stream.

At step 505, the consumer pub-sub client connects to the TDF for the stream in response to the command from the SDF. The command, as indicated above, specifies the TDF to which the consumer pub-sub client is to connect and the stream (StreamID) for which the consumer pub-sub client is to connect to the TDF. Here, the PSS layer at the consumer pub-sub client connects to the TDF mid-session without the need to notify the pub-sub applications.

At step 506, the TDF, after successfully connecting to the upstream DF and the consumer pub-sub client, reports to the SDF that it is ready for handover.

At step 507, the SDF determines that the last message acknowledged by the consumer pub-sub client to the SDF has MID = SMID. In other words, here SMID represents the MID of the last message acknowledged by the consumer pub-sub client to the SDF. Here, it is noted that message acknowledgement is needed not to prevent message losses but to set an appropriate message boundary for handover and to ensure that the TDF does not send the duplicate messages that the consumer pub-sub client already acknowledged. For example, if SMID = 10 is acknowledged and TMID = 15 is a buffer start, it is acceptable at QoS-0 that 10 < MID < 15 messages have been lost. As such, SDF computes a proper handover MID (HMID) as HMID = SMID.NEXT. It is noted that SMID.NEXT is the message immediately after SMID, but, in this case, the earliest MID for TDF is MID = 15; therefore, TDF starts streaming to the consumer pub-sub client from MID = 15.

At step 508, the SDF sends a command to the TDF to start sending messages of the stream (StreamID) to the consumer pub-sub client (ClientID) starting with HMID. Here, the command includes the stream identifier (StreamID) for the stream, the client identifier (ClientID) of the consumer pub-sub client, and the HMID value.

At step 509, the TDF starts sending messages to the consumer pub-sub client starting from HMID. At this step, the SDF has successfully handed over the consumer pub-sub client to the TDF.

At step 510, the TDF may decide, in order to save memory space for the buffer, to discard any messages in the buffer that have MID up to HMID.PREV (i.e., up to the message having an MID immediately preceding HMID).

At step 511, the SDF disconnects from the consumer pub-sub client by sending a Disconnect message to the consumer pub-sub client and, at this point, the handover procedure 500 is finished.

It will be appreciated that various other functions may be performed within the context of the handover procedure 500 of FIG. 5.

FIG. 6 depicts an example embodiment of a handover procedure for illustrating handover signaling and protocols for seamless handover of a consumer data function (consumer-DF), supporting a consumer pub-sub client using a make-before-break client connectivity mode, from an SDF to a TDF for a particular quality-of-service level (QoS-1) for the SDF-TDF handover and for a particular client-DF application QoS level (QoS-1) for client-DF message delivery.

As illustrated in FIG. 6, various functions of the handover signaling and protocols supported within the context of the handover procedure 600 are supported by a consumer pub-sub client for which a pub-sub session is being migrated, the SDF from which the pub-sub session is being migrated, the TDF to which the pub-sub session is being migrated, and the CF associated with the SDF and the TDF. For SDF-TDF handover for QoS-1 in the consumer-DF context, the TDF does not need to wait for state information from the SDF (as compared to QoS-0), so the TDF can start sending to the pub-sub client from the start of the buffer (TMID); however, the SDF needs to know HMID from the TDF in order to be able to send the messages before HMID to the pub-sub client in order to avoid message losses. The handover procedure 600 includes the following operational steps.

At step 601, the CF issues a Redirect command (for handover) to the SDF for the stream of the consumer pub-sub client for which the handover is to be performed. The Redirect command includes the client identifier (ClientID) of the consumer pub-sub client, the stream identifier (StreamID) of the stream, and an indication of the SDF which is currently being used by the stream for the consumer pub-sub client (i.e., source of the handover) and an indication of the TDF to which the stream for the consumer pub-sub client is being migrated (i.e., target of the handover). It will be appreciated that the Redirect command may include other information which may be used to support the handover procedure 600.

At step 602, the SDF, after receiving the Redirect command from the CF, sends a handover (HO) Request to the TDF. The SDF identifies the TDF, to which to send the HO Request, from the Redirect command received from the CF. The HO Request includes the stream identifier (StreamID) of the stream for which the handover is requested, which is obtained from the Redirect command. The HO Request, in the case of pub-sub message identification, also may include a mapping between MID and cMID.

At step 603, the TDF, after receiving the HO Request from the SDF, if not already connected to the upstream DF which is handling the stream, connects to the upstream DF which is handling the stream. The TDF identifies the upstream DF which is handling the stream from the stream identifier (StreamID) which is included in the HO Request from the SDF. The TDF, once connected to the upstream DF which is handling the stream, starts buffering messages from MID = TMID.

At step 604, the SDF sends a command to the consumer pub-sub client (specified by the ClientID in the Redirect message received from the CF) to instruct the consumer pub-sub client to connect to the TDF for the stream (specified by the StreamID in the Redirect message received from the CF). This command includes the stream identifier (StreamID) of the stream for which the consumer pub-sub client is to connect to the TDF, as well as the identifier of the TDF to which the consumer pub-sub client is to connect for the handover for the stream.

At step 605, the consumer pub-sub client connects to the TDF for the stream in response to the command from the SDF. The command, as indicated above, specifies the TDF to which the consumer pub-sub client is to connect and the stream (StreamID) for which the consumer pub-sub client is to connect to the TDF. Here, the PSS layer at the consumer pub-sub client connects to the TDF mid-session without the need to notify the pub-sub applications.

It will be appreciated that the steps 601 - 605 of the handover procedure 600 are similar to the steps 501-505 of the handover procedure 500 of FIG. 5, respectively.

At step 606, the TDF, based on detection of a timeout condition (namely, that the TDF has not received a message (to set TMID = MID) from an upstream DF for a period of time), obtains a streaming position (called MAXMID) which is the largest MID sent from the producer pub-sub client for the stream (StreamID). The TDF may obtain the MAXMID from the upstream DF which caches one MAXMID per stream (one MAXMID for one StreamID) or may obtain the MAXMID from the producer pub-sub client directly. The TDF, after obtaining MAXMID, sets TMID = MAXMID.NEXT. It is noted that, if the timeout condition is not met, the TDF must already have TMID from step 603.

At step 607, the TDF computes HMID by using the TMID as the HMID (namely, HMID = TMID).

At step 608, the TDF sends a signaling message to the SDF to inform the SDF that it is connected to the consumer pub-sub client and that it will send the next message at HMID to the consumer pub-sub client.

At step 609, the TDF starts sending messages to the consumer pub-sub client starting from HMID. At this step, the SDF has successfully handed over the consumer pub-sub client to the TDF.

At step 610, the SDF sends buffered messages with MID < HMID, if any, since the TDF does not have those messages. This ensures prevention of message loss.

At step 611, the SDF disconnects from the consumer pub-sub client by sending a Disconnect message to the consumer pub-sub client and, at this point, the handover procedure 600 is finished.

It will be appreciated that various other functions may be performed within the context of the handover procedure 600 of FIG. 6.

FIG. 7 depicts an example embodiment of a handover procedure for illustrating handover signaling and protocols for seamless handover of a consumer data function (consumer-DF), supporting a consumer pub-sub client using a make-before-break client connectivity mode, from an SDF to a TDF for a particular quality-of-service level (QoS-2) for the SDF-TDF handover and for a particular client-DF application QoS level (QoS-2) for client-DF message delivery.

As illustrated in FIG. 7, various functions of the handover signaling and protocols supported within the context of the handover procedure 700 are supported by a consumer pub-sub client for which a pub-sub session is being migrated, the SDF from which the pub-sub session is being migrated, the TDF to which the pub-sub session is being migrated, and the CF associated with the SDF and the TDF. For SDF-TDF handover for QoS-2 in the consumer-DF context, as compared to QoS-0 and QoS-1, the SDF computes HMID using MID information from both the SDF and the TDF and, after HMID is computed, the SDF and the TDF can send messages to the client at a correct message border in order to avoid both message loss and message duplication. The handover procedure 700 includes the following operational steps.

At step 701, the CF issues a Redirect command (for handover) to the SDF for the stream of the consumer pub-sub client for which the handover is to be performed. The Redirect command includes the client identifier (ClientID) of the consumer pub-sub client, the stream identifier (StreamID) of the stream, and an indication of the SDF which is currently being used by the stream for the consumer pub-sub client (i.e., source of the handover) and an indication of the TDF to which the stream for the consumer pub-sub client is being migrated (i.e., target of the handover). It will be appreciated that the Redirect command may include other information which may be used to support the handover procedure 700.

At step 702, the SDF, after receiving the Redirect command from the CF, sends a handover (HO) Request to the TDF. The SDF identifies the TDF, to which to send the HO Request, from the Redirect command received from the CF. The HO Request includes the stream identifier (StreamID) of the stream for which the handover is requested, which is obtained from the Redirect command. The HO Request, in the case of pub-sub message identification, also may include a mapping between MID and cMID.

At step 703, the TDF, after receiving the HO Request from the SDF, if not already connected to the upstream DF which is handling the stream, connects to the upstream DF which is handling the stream. The TDF identifies the upstream DF which is handling the stream from the stream identifier (StreamID) which is included in the HO Request from the SDF. The TDF, once connected to the upstream DF which is handling the stream, starts buffering messages from MID = TMID.

At step 704, the SDF sends a command to the consumer pub-sub client (specified by the ClientID in the Redirect message received from the CF) to instruct the consumer pub-sub client to connect to the TDF for the stream (specified by the StreamID in the Redirect message received from the CF). This command includes the stream identifier (StreamID) of the stream for which the consumer pub-sub client is to connect to the TDF, as well as the identifier of the TDF to which the consumer pub-sub client is to connect for the handover for the stream.

At step 705, the consumer pub-sub client connects to the TDF for the stream in response to the command from the SDF. The command, as indicated above, specifies the TDF to which the consumer pub-sub client is to connect and the stream (StreamID) for which the consumer pub-sub client is to connect to the TDF. Here, the PSS layer at the consumer pub-sub client connects to the TDF mid-session without the need to notify the pub-sub applications.

At step 706, the TDF, based on detection of a timeout condition (namely, that the TDF has not received a message (to set TMID = MID) from an upstream DF for a period of time), obtains a streaming position (called MAXMID) which is the largest MID sent from the producer pub-sub client for the stream (StreamID). The TDF may obtain the MAXMID from the upstream DF which caches one MAXMID per stream (one MAXMID for one StreamID) or may obtain the MAXMID from the producer pub-sub client directly. The TDF, after obtaining MAXMID, sets TMID = MAXMID.NEXT. It is noted that, if the timeout condition is not met, the TDF must already have TMID from step 703.

It will be appreciated that the steps 701 - 706 of the handover procedure 700 are similar to the steps 601-606 of the handover procedure 600 of FIG. 6, respectively.

At step 707, the TDF sends a signaling message to the SDF indicating that the consumer pub-sub client is connected to the TDF at TMID, which may be retrieved from either step 703 (non-timeout) or step 706 (timeout).

At step 708, the SDF computes a proper handover MID (HMID). The SDF computes the HMID to be the TMID based on a determination that SMID ≤ TMID, or SMID.NEXT otherwise.

At step 709, the SDF sends buffered messages with MID < HMID, if any, since the TDF does not have those messages. This ensures prevention of message loss.

At step 710, the SDF sends a command to the TDF to start sending messages of the stream (StreamID) to the consumer pub-sub client (ClientID) starting with HMID. Here, the command includes the stream identifier (StreamID) for the stream, the client identifier (ClientID) of the consumer pub-sub client, and the HMID value.

At step 711, the TDF starts sending messages to the consumer pub-sub client starting from HMID. At this step, the SDF has successfully handed over the consumer pub-sub client to the TDF.

At step 712, the TDF may decide, in order to save memory space for the buffer, to discard any messages in the buffer that have MID up to HMID.PREV (i.e., up to the message having an MID immediately preceding HMID).

At step 713, the SDF waits for acknowledgments for messages with SMID < MID < HMID because, if the messages are lost, they cannot be recovered by the TDF.

At step 714, the SDF, after either all of the acknowledgments have been received or a timeout has passed, disconnects from the consumer pub-sub client by sending a Disconnect message to the consumer pub-sub client and, at this point, the handover procedure 700 is finished.

It will be appreciated that various other functions may be performed within the context of the handover procedure 700 of FIG. 7.

FIG. 8 depicts an example embodiment of a handover procedure for illustrating handover signaling and protocols for seamless handover of a producer data function (producer-DF), supporting a producer pub-sub client using a make-before-break client connectivity mode, from an SDF to a TDF for a particular quality-of-service level (QoS-0) for the SDF-TDF handover and for a particular client-DF application QoS level (QoS-0) for client-DF message delivery.

As illustrated in FIG. 8, various functions of the handover signaling and protocols supported within the context of the handover procedure 800 are supported by a producer pub-sub client for which a pub-sub session is being migrated, the SDF from which the pub-sub session is being migrated, the TDF to which the pub-sub session is being migrated, downstream DFs between the SDF and the TDF, and the CF associated with the SDF and the TDF. It is noted that a producer-DF handover is expected to involve more steps than a corresponding consumer-DF handover since the producer-DF is connected to the producer pub-sub client and a number of downstream DFs and, thus, there will be additional handshakes with the downstream-DFs (which are not present in the consumer DF-handover). For SDF-TDF handover for QoS-0 in the producer-DF context, the TDF needs to wait for HMID (=SMID) from the SDF in order to avoid delivery of duplicate messages to downstream DFs, where SMID is the last message with maximum MID received by the SDF. It is noted that the MID that is sent to downstream DFs cannot be used because these downstream DFs may apply different filters to the topic and, as a result, may have received different MIDs for their last messages. The handover procedure 800 includes the following operational steps.

At step 801, the CF issues a Redirect command (for handover) to the SDF for the stream of the producer pub-sub client for which the handover is to be performed. The Redirect command includes the client identifier (ClientID) of the producer pub-sub client, the stream identifier (StreamID) of the stream, and an indication of the SDF which is currently being used by the stream for the producer pub-sub client (i.e., source of the handover) and an indication of the TDF to which the stream for the producer pub-sub client is being migrated (i.e., target of the handover). It will be appreciated that the Redirect command may include other information which may be used to support the handover procedure 800.

At step 802, the SDF, after receiving the Redirect command from the CF, sends a handover (HO) Request to the TDF. The SDF identifies the TDF, to which to send the HO Request, from the Redirect command received from the CF. The HO Request includes the stream identifier (StreamID) of the stream for which the handover is requested, which is obtained from the Redirect command. The HO Request, in the case of pub-sub message identification, also may include a mapping between MID and cMID.

At step 803, the SDF sends a command to the producer pub-sub client for the producer pub-sub client to connect to the TDF for the stream. The command identifies the TDF and includes the stream identifier (StreamID) of the stream.

At step 804, the SDF sends commands to the downstream DFs for the downstream DFs to connect to the TDF for the stream. The command for a downstream DF identifies the downstream DF and includes an identifier of the TDF and the stream identifier (StreamID) of the stream.

At step 805, the producer pub-sub client, in response to the command from the SDF, connects to the TDF for the stream.

At step 806, the downstream DFs, in response to the commands from the SDF, connect to the TDF for the stream.

At step 807, the TDF, after the producer pub-sub client connects to the TDF for the stream, starts buffering messages of the stream from the producer pub-sub client from TMID.

At step 808, the TDF sends a message to the SDF indicating that the TDF is ready for handover.

At step 809, the SDF, after receiving the message from the TDF indicating that the TDF is ready to handover, saves the maximum MID that it receives from the producer as SMID and then sets HMID = SMID.

At step 810, the SDF sends any messages until HMID.PREV (i.e., up to the message having an MID immediately preceding HMID), if any, to the downstream DFs.

At step 811, the SDF sends a command to the TDF for the TDF to start streaming from HMID.

At step 812, the TDF, in response to the command from the SDF, starts sending messages from HMID to the downstream DFs. If HMID < TMID, the TDF starts streaming from TMID and messages between HMID and TMID will be lost (which is acceptable for QoS-0). At this point, the SDF has successfully handed over to the TDF.

At step 813, the TDF may decide, in order to save memory space for the buffer, to discard any messages in the buffer that have MID up to HMID.PREV.

At step 814, the SDF disconnects from the producer pub-sub client by sending a Disconnect message to the producer pub-sub client.

At step 815, the SDF disconnects from the downstream DFs by sending a Disconnect messages to the downstream DFs and, at this point, the handover procedure 800 is finished.

It will be appreciated that various other functions may be performed within the context of the handover procedure 800 of FIG. 8.

FIG. 9 depicts an example embodiment of a handover procedure for illustrating handover signaling and protocols for seamless handover of a producer data function (producer-DF), supporting a producer pub-sub client using a make-before-break client connectivity mode, from an SDF to a TDF for a particular quality-of-service level (QoS-1) for the SDF-TDF handover and for a particular client-DF application QoS level (QoS-1) for client-DF message delivery.

As illustrated in FIG. 9, various functions of the handover signaling and protocols supported within the context of the handover procedure 900 are supported by a producer pub-sub client for which a pub-sub session is being migrated, the SDF from which the pub-sub session is being migrated, the TDF to which the pub-sub session is being migrated, downstream DFs between the SDF and the TDF, and the CF associated with the SDF and the TDF. It is noted that a producer-DF handover is expected to involve more steps than a corresponding consumer-DF handover since the producer-DF is connected to the producer pub-sub client and a number of downstream DFs and, thus, there will be additional handshakes with the downstream-DFs (which are not present in the consumer DF-handover). For SDF-TDF handover for QoS-1 in the producer-DF context, as compared to QoS-0, the TDF can start streaming to the downstream DFs as soon as the TDF starts buffering messages from the producer pub-sub client and, subsequently, the TDF informs the SDF of HMID (= TMID) so that the SDF can send the messages prior to HMID in order to avoid message losses. The handover procedure 900 includes the following operational steps.

At step 901, the CF issues a Redirect command (for handover) to the SDF for the stream of the producer pub-sub client for which the handover is to be performed. The Redirect command includes the client identifier (ClientID) of the producer pub-sub client, the stream identifier (StreamID) of the stream, and an indication of the SDF which is currently being used by the stream for the producer pub-sub client (i.e., source of the handover) and an indication of the TDF to which the stream for the producer pub-sub client is being migrated (i.e., target of the handover). It will be appreciated that the Redirect command may include other information which may be used to support the handover procedure 800.

At step 902, the SDF, after receiving the Redirect command from the CF, sends a handover (HO) Request to the TDF. The SDF identifies the TDF, to which to send the HO Request, from the Redirect command received from the CF. The HO Request includes the stream identifier (StreamID) of the stream for which the handover is requested, which is obtained from the Redirect command. The HO Request, in the case of pub-sub message identification, also may include a mapping between MID and cMID.

At step 903, the SDF sends a command to the producer pub-sub client for the producer pub-sub client to connect to the TDF for the stream. The command identifies the TDF and includes the stream identifier (StreamID) of the stream.

At step 904, the SDF sends commands to the downstream DFs for the downstream DFs to connect to the TDF for the stream. The command for a downstream DF identifies the downstream DF and includes an identifier of the TDF and the stream identifier (StreamID) of the stream.

At step 905, the producer pub-sub client, in response to the command from the SDF, connects to the TDF for the stream.

At step 906, the downstream DFs, in response to the commands from the SDF, connect to the TDF for the stream.

At step 907, the TDF, after the producer pub-sub client connects to the TDF for the stream, starts buffering messages of the stream from the producer pub-sub client from TMID.

It will be appreciated that the steps 901 - 907 of the handover procedure 900 are similar to the steps 801-807 of the handover procedure 800 of FIG. 8, respectively.

At step 908, the TDF gets a stream position from the producer pub-sub client as MAXMID.

At step 909, the TDF, based on detection of a timeout condition (namely, that the TDF has not received a message (to set TMID = MID) from the producer pub-sub client for a period of time), obtains a streaming position (called MAXMID) which is the largest MID sent from the producer pub-sub client for the stream (StreamID). The TDF may obtain the MAXMID from the producer pub-sub client directly. The TDF, after obtaining MAXMID, sets TMID = MAXMID.NEXT. It is noted that, if the timeout condition is not met, the TDF must already have TMID.

At step 910, the TDF computes HMID by using the TMID as the HMID (namely, HMID = TMID).

At step 911, the TDF sends a signaling message to the SDF to inform the SDF that it will start streaming to the downstream DFs from HMID.

At step 912, the TDF starts streaming to the downstream DFs from HMID. At this step, the SDF has successfully handed over the producer pub-sub client to the TDF.

At step 913, the SDF sends messages until HMID.PREV (i.e., up to the message having an MID immediately preceding HMID), if any, to the downstream DFs. This ensures prevention of message loss.

At step 914, the SDF disconnects from the producer pub-sub client by sending a Disconnect message to the producer pub-sub client.

At step 915, the SDF disconnects from the downstream DFs by sending Disconnect messages to the downstream DFs and, at this point, the handover procedure 900 is finished.

It will be appreciated that various other functions may be performed within the context of the handover procedure 900 of FIG. 9.

FIG. 10 depicts an example embodiment of a handover procedure for illustrating handover signaling and protocols for seamless handover of a producer data function (producer-DF), supporting a producer pub-sub client using a make-before-break client connectivity mode, from an SDF to a TDF for a particular quality-of-service level (QoS-2) for the SDF-TDF handover and for a particular client-DF application QoS level (QoS-2) for client-DF message delivery.

As illustrated in FIG. 10, various functions of the handover signaling and protocols supported within the context of the handover procedure 1000 are supported by a producer pub-sub client for which a pub-sub session is being migrated, the SDF from which the pub-sub session is being migrated, the TDF to which the pub-sub session is being migrated, downstream DFs between the SDF and the TDF, and the CF associated with the SDF and the TDF. It is noted that a producer-DF handover is expected to involve more steps than a corresponding consumer-DF handover since the producer-DF is connected to the producer pub-sub client and a number of downstream DFs and, thus, there will be additional handshakes with the downstream-DFs (which are not present in the consumer DF-handover). For SDF-TDF handover for QoS-2 in the producer-DF context, which provides the most stringent QoS, the SDF needs to wait for both SMID and TMID in order to calculate HMID. For SDF-TDF handover for QoS-2 in the producer-DF context, as opposed to QoS-2 handover in the consumer-DF context, HMID is SMID (not SMID.NEXT) if SMID > TMID because, by definition, SMID is the message with maximum MID (MAXMID) received by SDF, not the MAXMID sent to the consumer (as in consumer-DF handover). The handover procedure 1000 includes the following operational steps.

At step 1001, the CF issues a Redirect command (for handover) to the SDF for the stream of the producer pub-sub client for which the handover is to be performed. The Redirect command includes the client identifier (ClientID) of the producer pub-sub client, the stream identifier (StreamID) of the stream, and an indication of the SDF which is currently being used by the stream for the producer pub-sub client (i.e., source of the handover) and an indication of the TDF to which the stream for the producer pub-sub client is being migrated (i.e., target of the handover). It will be appreciated that the Redirect command may include other information which may be used to support the handover procedure 800.

At step 1002, the SDF, after receiving the Redirect command from the CF, sends a handover (HO) Request to the TDF. The SDF identifies the TDF, to which to send the HO Request, from the Redirect command received from the CF. The HO Request includes the stream identifier (StreamID) of the stream for which the handover is requested, which is obtained from the Redirect command. The HO Request, in the case of pub-sub message identification, also may include a mapping between MID and cMID.

At step 1003, the SDF sends a command to the producer pub-sub client for the producer pub-sub client to connect to the TDF for the stream. The command identifies the TDF and includes the stream identifier (StreamID) of the stream.

At step 1004, the SDF sends commands to the downstream DFs for the downstream DFs to connect to the TDF for the stream. The command for a downstream DF identifies the downstream DF and includes an identifier of the TDF and the stream identifier (StreamID) of the stream.

At step 1005, the producer pub-sub client, in response to the command from the SDF, connects to the TDF for the stream.

At step 1006, the downstream DFs, in response to the commands from the SDF, connect to the TDF for the stream.

At step 1007, the TDF, after the producer pub-sub client connects to the TDF for the stream, starts buffering messages of the stream from the producer pub-sub client from TMID.

At step 1008, the TDF gets a stream position from the producer pub-sub client as maxMID.

At step 1009, the TDF, based on detection of a timeout condition (namely, that the TDF has not received a message (to set TMID = MID) from an upstream DF for a period of time), obtains a streaming position (called MAXMID) which is the largest MID sent from the producer pub-sub client for the stream (StreamID). The TDF may obtain the MAXMID from the upstream DF which caches one MAXMID per stream (one MAXMID for one StreamID) or may obtain the MAXMID from the producer pub-sub client directly. The TDF, after obtaining MAXMID, sets TMID = MAXMID.NEXT. It is noted that, if the timeout condition is not met, the TDF must already have TMID.

It will be appreciated that the steps 1001 - 1009 of the handover procedure 1000 are similar to the steps 901-909 of the handover procedure 900 of FIG. 9, respectively.

At step 1010, the TDF sends a signaling message to the SDF indicating that the producer pub-sub client is connected to the TDF at TMID, which may be retrieved from either step 1007 (non-timeout) or step 1009 (timeout).

At step 1011, the SDF saves the maximum MID it receives from the producer pub-sub client as SMID and then computes a proper handover MID (HMID). The SDF computes the HMID to be the TMID based on a determination that SMID ≤ TMID, or SMID otherwise.

At step 1012, the SDF sends a signaling command to the TDF for the TDF to start streaming to the downstream DFs from HMID.

At step 1013, the TDF, in response to the signaling command from the SDF, starts streaming to the downstream DFs from HMID.

At step 1014, the TDF may decide, in order to save memory space for the buffer, to discard any messages in the buffer that have MID up to HMID.PREV (i.e., up to the message having an MID immediately preceding HMID).

At step 1015, the SDF sends messages to downstream DFs until HMID.PREV since these messages cannot be recovered by the TDF.

At step 1016, the SDF, after receiving acknowledgments from the downstream DFs, disconnects from the producer pub-sub client.

At step 1017, the SDF, after receiving acknowledgements from the downstream DFs, disconnects from the downstream DFs.

It will be appreciated that various other functions may be performed within the context of the handover procedure 1000 of FIG. 10.

It will be appreciated that the handover signaling and protocols of FIG. 5 - FIG. 10 discussed above ensure different QoS levels from the network side. This reduces both redundant data transmission in the network and processing overhead at the client side. In at least some example embodiments, the PSS layer at the pub-sub client alternatively or also may perform additional processing to achieve the QoS level required by the pub-sub application. For example, DFs can perform handover for QoS-1 (no message loss), the PSS layer can detect and remove redundant messages before sending to the pub-sub application to achieve QoS-2 (neither message loss nor message duplication), and so forth. It is noted that PSS processing overhead for supporting different QoS levels at the pub-sub applications and at DF-level handover are summarized in Table 1.

**TABLE 1**

| | | Pub-Sub Application Requirements | | |
|---|---|---|---|---|
| | | QoS-0 | QoS-1 | QoS-2 |
| DF-Level Handover Support | QoS-0 | No processing overhead at PSS. | PSS detects and recovers lost messages from PSaaS. | PSS detects and recovers lost messages from PSaaS. |
| | QoS-1 | PSS detects and removes redundant messages before sending to app. | No processing overhead at PSS. | PSS detects and removes redundant messages before sending to application. |
| | QoS-2 | No processing overhead at PSS. | No processing overhead at PSS. | No processing overhead at PSS. |

It will be appreciated that various example embodiments for supporting seamless handover of pub-sub sessions between DFs based on handover signaling capabilities in which each of the three QoS levels supported by the pub-sub clients are handled differently for consumer pub-sub clients and producer pub-sub clients (e.g., example embodiments presented with respect to FIGs. 3 - 10) may be provided in various other ways.

Various example embodiments may be configured to support seamless handover of pub-sub sessions between DFs based on handover signaling capabilities in which each of the three QoS levels supported by the pub-sub clients are handled together for consumer pub-sub clients and producer pub-sub clients based on whether the pub-sub clients are make-before-break pub-sub clients or break-before-make pub-sub clients. It will be appreciated that such example embodiments are presented with respect to FIGs. 11 - 18. It will be appreciated that at least some such embodiments may be used within the context of certain example embodiments presented with respect to FIGs. 3 - 10.

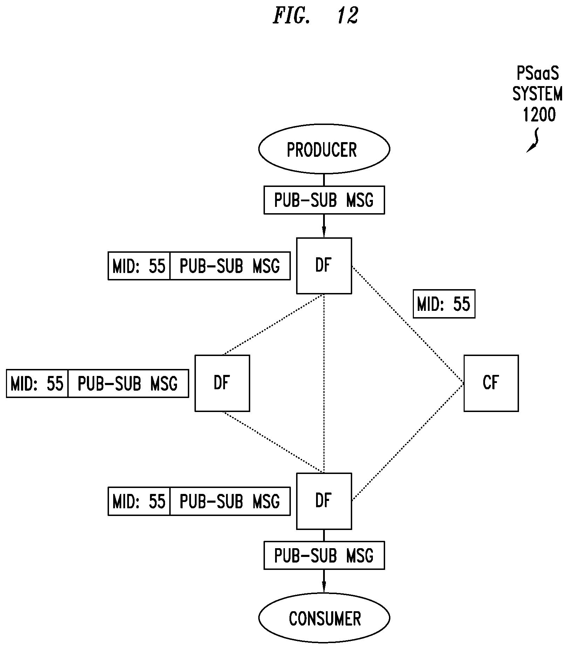

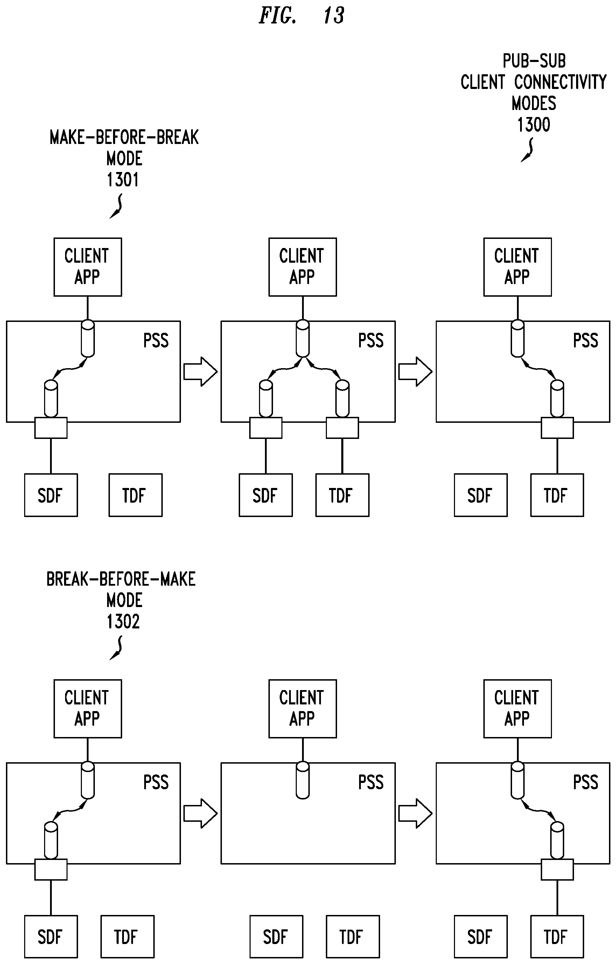

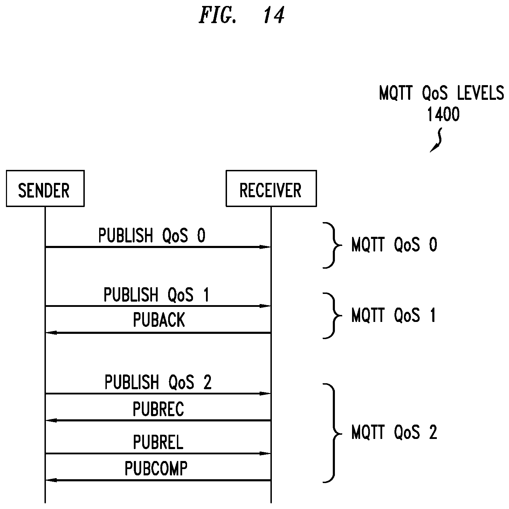

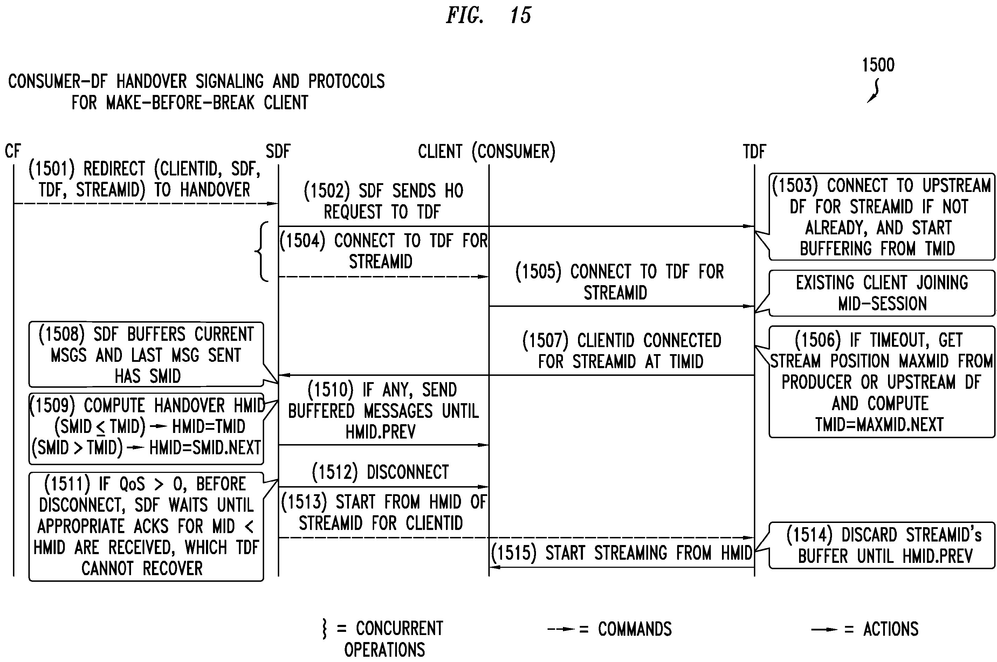

Various example embodiments for supporting seamless handover of pub-sub sessions between DFs, based on handover signaling capabilities in which each of the three QoS levels are handled together for consumer pub-sub clients and producer pub-sub clients based on whether the pub-sub clients are make-before-break pub-sub clients or break-before-make pub-sub clients, may be configured to support various capabilities. These example embodiments may provide handover schemes for pub-sub session handover of a pub-sub client across DFs. These example embodiments may provide schemes that consider multiple QoS levels (at most once, at least once, or exactly once) supported by various pub-sub protocols available today and also make the handover independent of the pub-sub protocol used by the pub-sub client. These example embodiments may provide handover protocols that support all application QoS levels (at most once, at least once, or exactly once) in a "best-effort" manner without handover-induced message loss or duplication. These example embodiments, based on an inherent distribution tree of pub-sub (from producer to consumer), may support handover for both producer-DF (root) and consumer-DF (leaf). These example embodiments may support protocols that assume minimal control and workload at the client and support client connectivity modes of make-before-break or break-before-make. These example embodiments may provide protocols that perform DF handover on demand at any time without a standby, backup DF. These example embodiments may provide protocols that can handover DFs with in-memory data without data storage replication or storage sharing among DFs. These example embodiments may be based on a pub-sub session (PSS) layer as presented with respect to FIG. 11, use of message identifiers as presented with respect to FIG. 12, use of pub-sub client connectivity modes as presented with respect to FIG. 13, use of various QoS levels as presented with respect to FIG. 14, use of handover signaling and protocols as presented with respect to FIGs. 15 - 18, or the like, as well as various combinations thereof.

FIG. 11 depicts an example embodiment of a PSaaS system configured to support use of a pub-sub session (PSS) layer, provided above a transport layer and below a pub-sub application layer, configured to support seamless handover of pub-sub sessions of pub-sub clients.

As illustrated in FIG. 11, the PSaaS system 1100 includes a pub-sub client 1110 (which may be a producer or a consumer), a data function (DF) 1120, a Control Function (CF) 1130, and the Internet 1140. The pub-sub client 1110, the DF 1120, and the CF 1130 are each communicatively connected to the Internet 1140. The pub-sub client 1110 and the DF 1120 are configured to communicate via the Internet 1140 for data communications. The CF 1130 is configured to communicate with the DF 1120 via the Internet 1140 for providing various control commands to the DF 1120. The pub-sub client 1110 and the DF 1120 each support communications based on a protocol stack that includes, among other layers which have been omitted for purposes of clarity, a pub-sub application layer 1151 (depicted as pub-sub application layer 1151-1 on the pub-sub client 1110 and pub-sub application layer 1151-2 on the DF 1120), a Pub-Sub Session (PSS) layer 1152 (depicted as PSS layer 1152-1 on the pub-sub client 1110 and PSS layer 1152-2 on the DF 1120) below the pub-sub application layer 1151, a transport layer 1153 (depicted as transport layer 1153-1 on the pub-sub client 1110 and transport layer 1153-2 on the DF 1120) below the PSS layer 1152, and a network layer 1154 (pub-sub application layer 1151-1 on the pub-sub client 1110 and pub-sub application layer 1151-2 on the DF 1120) below the transport layer 1153. It will be appreciated that other layers may be supported within the protocol stacks of the various components.

The pub-sub application layer 1151 is the application layer on which the pub-sub sessions are based. The pub-sub application layer 1151 may be based on various pub-sub protocols. For example, the pub-sub application layer 1151 may be based on MQTT, AMQP, Kafka, or the like, as well as various combinations thereof. It will be appreciated that various other pub-sub protocols may be utilized at the pub-sub application layer 1151.

The PSS layer 1152 may be configured to support various functions and may be implemented in various ways. The PSS layer 1152 may be configured to support communications of different pub-sub applications (e.g., MQTT, AMQP, Kafka, or the like) used by different pub-sub clients such as pub-sub client 1110. The PSS layer 1152 can be supported explicitly as application program interfaces (APIs) that the pub-sub application can call, or the PSS layer 1152 can be supported implicitly as an agent that controls connections while the pub-sub application can behave as-is.

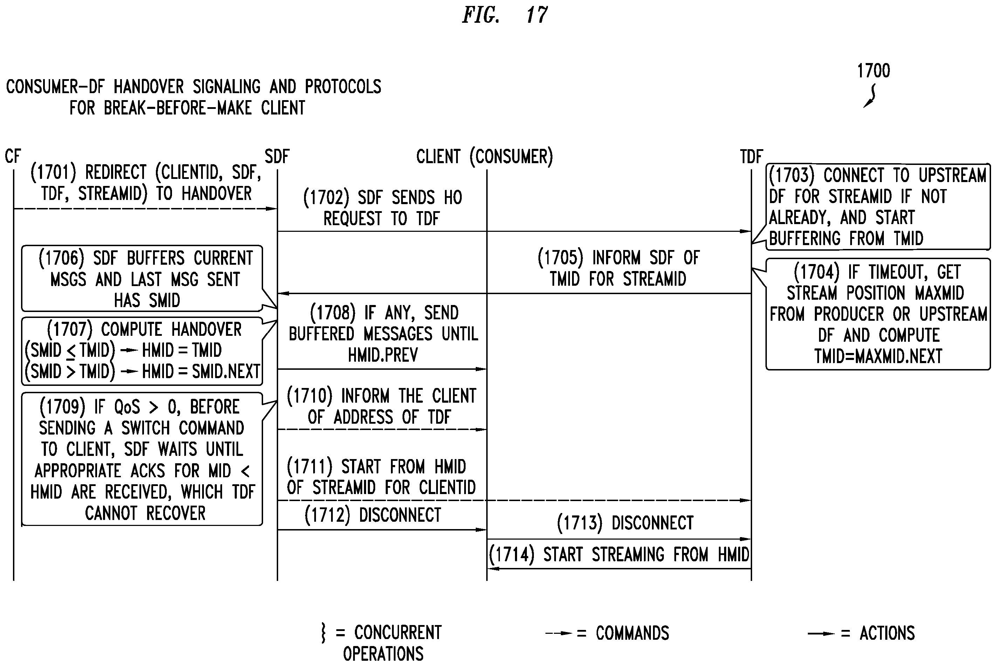

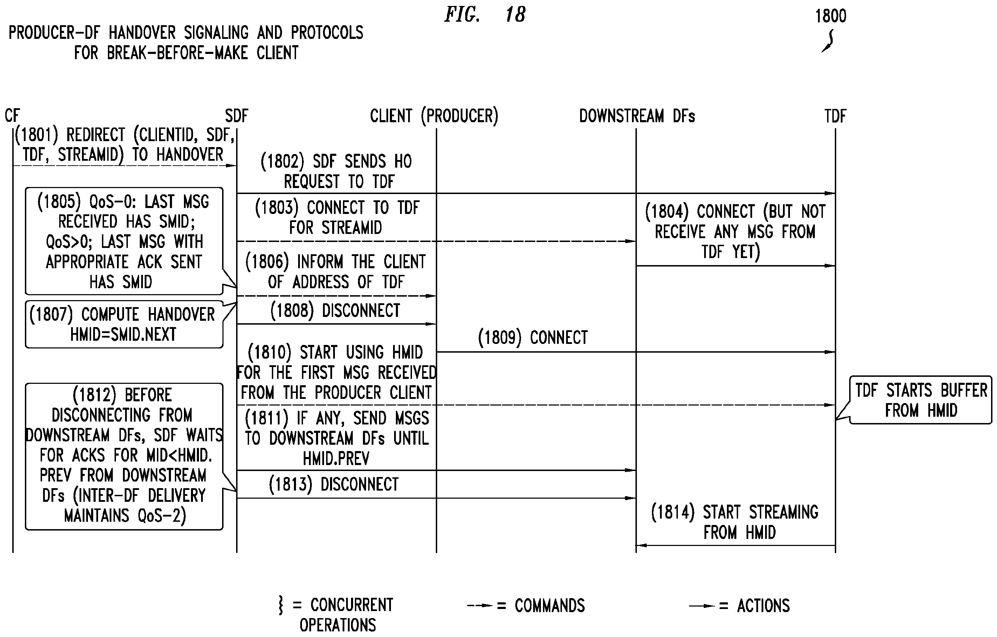

The PSS layer 1152-1 at the pub-sub client 1110 is configured to support various functions at the pub-sub client 1110. The PSS layer 1152-1 at the pub-sub client 1110 may include buffering of messages from/to the pub-sub application layer 1151-1, establishing a new connection to a DF as required by the protocols, communicating with DFs for handover commands, or the like, as well as various combinations thereof. The PSS layer 1152-1 at the pub-sub client 1110 may be configured to support handovers for the make-before-break client connectivity mode (e.g., by maintaining two connections to the SDF and the TDF for handover without being required to generate MIDs for the messages, and without being required to generate MIDs for the messages, example embodiments of which are presented with respect to FIGs. 17 and 18) and for the break-before make client connectivity mode (e.g., without being required to maintain two connections to the SDF and the TDF for handover and without being required to generate MIDs for the messages, example embodiments of which are presented with respect to FIGs. 17 and 18). The PSS layer 1152-1 at the pub-sub client 1110 enables these functionalities at the client 1110 by establishing communications with DFs for coordinating handover operations, without notifying pub-sub applications (e.g., continuing existing pub-sub application sessions). For example, ActiveMQ running at a consumer pub-sub client does not need to call any methods or handle any callbacks when the consumer-DF is being handed over. The handover protocols support both make-before-break and break-before-make modes of operations at the pub-sub client 1110, as discussed further below.

The PSS layer 1152-2 at the DF 1120 is configured to support various functions at the DF 1120. Common functions of the PSS layer 1152-2 at the DF 1120 includes communicating with the CF 1130 for handover commands, generating message identifiers (MIDs) for every message received from a producer, supporting communications between the PSS layer at the SDF and the PSS layer at the TDF to synchronize states and hand over connections to pub-sub clients (e.g., SDF PSS calculates an appropriate MID for handover, as discussed further below). The handover protocols support both make-before-break and break-before-make modes of operations at the pub-sub client 1110, as discussed further below.

The lower protocol stack layers which function below the PSS layer 1152, including the transport layer 1153 (transport layer 1153-1 on pub-sub client 1110 and transport layer 1153-2 on DF 1120) and the network layer 1154 (network layer 1154-1 on pub-sub client 1110 and network layer 1154-2 on DF 1120) may be configured to support communications of the pub-sub application layer 1151 based on the intervening PSS layer 1152. For example, the transport layer 1153 may be implemented using Transmission Control Protocol (TCP) and/or any other transport layer protocols suitable for supporting pub-sub communications in a pub-sub context. For example, the network layer 1154 may be implemented using Internet Protocol (IP) and/or any other network layer protocol(s) suitable for supporting pub-sub communications in a pub-sub context. It will be appreciated that various other lower protocol stack layers may be utilized for supporting communications of the pub-sub application layer 1151 based on the intervening PSS layer 1152.

It will be appreciated that the PSS layer 1152 may be configured to support various other functions for supporting seamless handover of pub-sub sessions of make-before-break pub-sub clients and break-before-make pub-sub clients.

FIG. 12 depicts an example embodiment of a portion of a PSaaS system for illustrating a scheme for use of message identifiers to support message identification for supporting seamless handover of pub-sub sessions of pub-sub clients.

The PSaaS system 1200 may be configured to support message identifier generation and de-generation. In order for pub-sub handover to achieve minimal message loss or message duplication during handovers, the PSaaS network needs to be able to detect duplicate messages or determine if one message is generated after another. The MIDs may be specified as follows: MID for produced message n is *MID(n),* and for the next produced message n+1 is *MID(n+1) and, therefore, MID(n+1)* must be strictly greater than *MID(n).* MID generation is typical for existing pub-sub protocols and implementations as available in AMQP implementations such as ActiveMQ or Rabbit MQ, and also in Kafka protocols. However, some pub-sub applications may generate MIDs that are not compliant with the specification above (e.g., MQTT may re-use the same packet ID for two unrelated messages). For this reason, internal MIDs may be generated at the producer-DF, and these MIDs can be utilized by DF or CF in PSaaS. For example, they can facilitate the handover protocols as discussed below. Finally, the protocol can remove these internal MIDs before delivering the messages to a consumer pub-sub client.

The PSaaS system 1200, as indicated above, may be configured to support message identifier generation and de-generation. Message identifiers or MIDs are important for handover operations because they assist PSaaS systems in: (1) detecting duplicate messages and (2) leveraging message orders for handover. It is assumed that the MIDs are unique among messages and increase from an older message to a newer message. As illustrated in FIG. 12, the producer at the top generates a new message (the data block) and then the producer-DF generates MID 55 for the received message according to the MID specification above. The CF may use MID as part of the record for this new message event. Any downstream DF receiving this message can access and utilize this MID as needed. Finally, the consumer-DF removes MID and only sends the original application message (the data block) to the consumer pub-sub client.

FIG. 13 depicts an example embodiment of pub-sub client connectivity modes including a make-before-break mode and a break-before-make mode.

As illustrated in FIG. 13, pub-sub client connectivity modes 1300 include a make-before-break mode 1301 and a break-before-make mode 1302. It is noted that various handover signaling and protocols may support handovers for make-before-break pub-sub clients and break-before-make pub-sub clients. It is noted that, in either mode, the handover is handled at the PSS layer without having to interrupt or even notify the client application of the handover event.

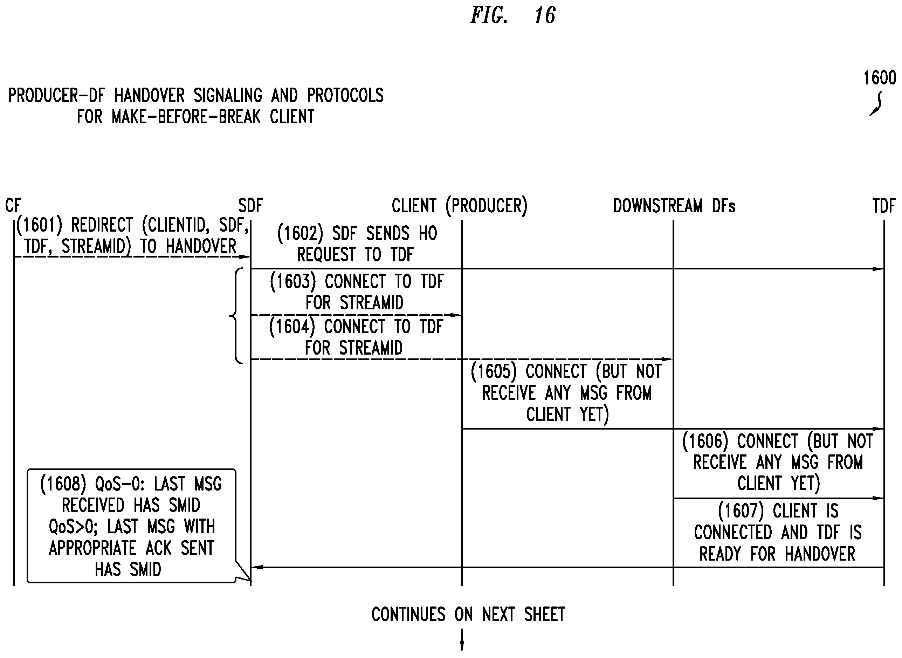

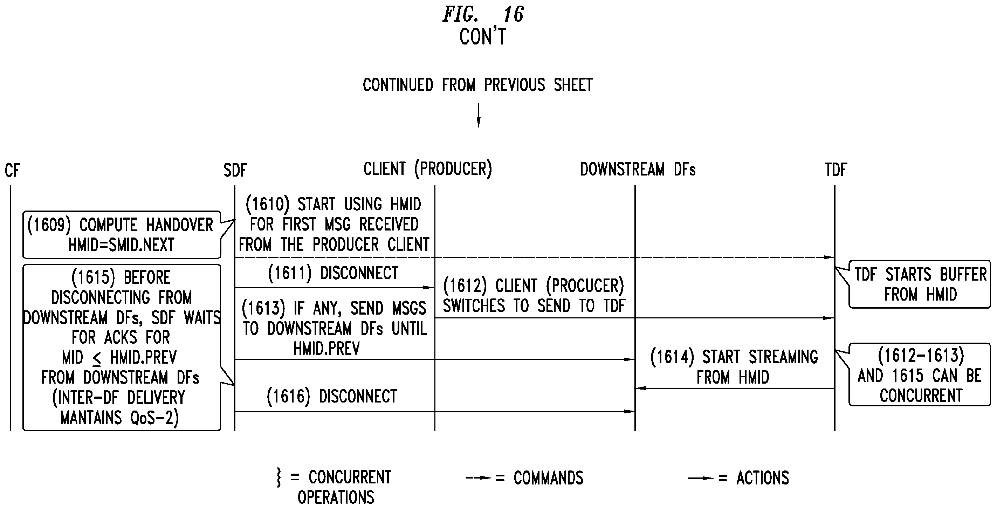

In the make-before-break mode 1301, the pub-client connects to the SDF before the handover, then to both the SDF and the TDF during the handover, and finally disconnects from SDF after the handover is ready to be finished. Implementation in this mode may include having the client application use a PSS library as application program interfaces (APIs) where message queues and DF connections are managed. Additionally, using this mode, the client application needs to support having two concurrent connections with the SDF and the TDF during the handover. It is noted that handover signaling and protocols for make-before-break pub-sub clients using the make-before-break mode 1301 are illustrated with respect to FIG. 15 (for consumer-side handovers) and FIG. 16 (for producer-side handovers).

In the break-before-make mode 1302, the pub-sub client connects to the SDF before the handover, then disconnects from SDF (at this point connects to no DF), and finally connects to the TDF. Implementation in this mode may include having a client software agent that can (1) buffer messages to and from the client application during the handover and (2) steer the connection from the SDF to the TDF. It is noted that handover signaling and protocols for break-before-make pub-sub clients using the break-before-make mode 1302 are illustrated with respect to FIG. 17 (for consumer-side handovers) and FIG. 18 (for producer-side handovers).

The handover signaling and protocols may be configured to support the three QoS levels typically supported by pub-sub applications, and may be different for those QoS levels. Namely, the handover signaling and protocols may be configured to support the three QoS levels typically supported by pub-sub applications as follows: (a) QoS-0 ("at most once") in which messages may be lost but never re-delivered, (b) QoS-1 ("at least once") in which messages are never lost but may be re-delivered, and (c) QoS-2 ("exactly once") in which each message is delivered once and only once. In pub-sub applications, none of the QoS levels explicitly enforces in-order message delivery. It will be appreciated that the three QoS levels may be further understood by considering these QoS levels within the context of the MQTT protocol, as presented with respect to FIG. 14.

FIG. 14 depicts an example embodiment of implementation of three QoS levels within the context of the Message Queuing Telemetry Transport (MQTT) protocol. As illustrated in FIG. 14, the MQTT QoS levels 1400 include a QoS-0 level (denoted as MQTT QoS 0), a QoS-1 level (denoted as MQTT QoS 1), and a QoS-2 level (denoted as MQTT QoS 2). For QoS-0, MQTT operates such that the sender can send a message without expecting an acknowledgement from the receiver; hence, a message can be lost. For QoS-1, in order to improve reliability, MQTT operates such that the sender enforces acknowledgement from the receiver (PUBACK) but never checks for message identifiers and, hence, the receiver can get duplicate messages. For QoS-2, MQTT utilizes a release signaling (PUBREL) from the sender to inform the receiver that the previously sent message identifier (or packetID) can be re-used and, after acknowledging the release with PUBCOMP, the receiver can expect the next message as a non-duplicate from the sender. It is noted that: (1) for publishing, the sender is a producer and the receiver is a DF and (2) for subscribing, the sender is a DF and the receiver is a consumer.

The handover signaling and protocols may be different for consumer-DFs and producer-DFs. The consumer-DFs and producer-DFs use different handover signaling and protocols because the latter (handing over the root) involves downstream DFs in addition to the pub-sub client, whereas, for the consumer-DF, the handover is a handover of the leaf nodes. Within the handover of the same DF function, the handover behaves similarly for the QoS levels, with the differences among the QoS levels being (1) the SDF uses different acknowledgment messages to control the message boundary for handover (PUBACK for QoS-1 and PUBCOMP for QoS-2), and, for QoS-0, it uses the last sent or received message instead of acknowledgement and (2) before disconnecting from a client, the SDF ascertains successful message delivery within its handover boundary, so the SDF waits for different acknowledgement signaling (PUBACK for QoS-1 and PUBCOMP for QoS-2), whereas, for QoS-0, the SDF does not wait for any acknowledgement. It is noted that handover signaling and protocols for supporting handover of consumer-DFs are presented with respect to FIG. 15 (for make-before-break pub-sub clients) and FIG. 16 (for break-before-make pub-sub clients), whereas handover signaling and protocols for supporting handover of producer-DFs are presented with respect to FIG. 17 (for make-before-break pub-sub clients) and FIG. 18 (for break-before-make pub-sub clients). It is noted that, for these handover procedures, the term MID.NEXT is used to suggest "any" message that comes after MID, without the need to know a specific message for MID.NEXT (which is possible based on the assumptions that MID is both unique and incremented by the operators to check a pair of messages if (1) they are the same or (2) a message comes before or after another).

FIG. 15 depicts an example embodiment of a handover procedure for illustrating handover signaling and protocols for seamless handover of a consumer data function (consumer-DF), supporting a consumer pub-sub client using a make-before-break client connectivity mode, from an SDF to a TDF for a particular quality-of-service level (QoS-2) for the SDF-TDF handover and for each of the potential client-DF application QoS levels (QoS-0, QoS-1, QoS-2) for client-DF message delivery.

As illustrated in FIG. 15, various functions of the handover signaling and protocols supported within the context of the handover procedure 1500 are supported by a consumer pub-sub client for which a pub-sub session is being migrated, the SDF from which the pub-sub session is being migrated, the TDF to which the pub-sub session is being migrated, and the CF associated with the SDF and the TDF. The handover procedure 1500 includes the following operational steps.

At step 1501, the CF issues a Redirect command (for handover) to the SDF for the stream of the consumer pub-sub client for which the handover is to be performed. The Redirect command includes the client identifier (ClientID) of the consumer pub-sub client, the stream identifier (StreamID) of the stream, and an indication of the SDF which is currently being used by the stream for the consumer pub-sub client (i.e., source of the handover) and an indication of the TDF to which the stream for the consumer pub-sub client is being migrated (i.e., target of the handover). It will be appreciated that the Redirect command may include other information which may be used to support the handover procedure 1500. It is noted that, after step 1501, the SDF buffers current messages and the MID of the last message that is sent by the SDF is used as SMID.

At step 1502, the SDF, after receiving the Redirect command from the CF, sends a handover (HO) Request to the TDF. The SDF identifies the TDF, to which to send the HO Request, from the Redirect command received from the CF. The HO Request includes the stream identifier (StreamID) of the stream for which the handover is requested, which is obtained from the Redirect command. The HO Request, in the case of pub-sub message identification, also may include a mapping between MID and cMID.

At step 1503, the TDF, after receiving the HO Request from the SDF, if not already connected to the upstream DF which is handling the stream, connects to the upstream DF which is handling the stream. The TDF identifies the upstream DF which is handling the stream from the stream identifier (StreamID) which is included in the HO Request from the SDF. The TDF, once connected to the upstream DF which is handling the stream, starts buffering messages from MID = TMID.

At step 1504, the SDF sends a command to the consumer pub-sub client (specified by the ClientID in the Redirect message received from the CF) to instruct the consumer pub-sub client to connect to the TDF for the stream (specified by the StreamID in the Redirect message received from the CF). This command includes the stream identifier (StreamID) of the stream for which the consumer pub-sub client is to connect to the TDF, as well as the identifier of the TDF to which the consumer pub-sub client is to connect for the handover for the stream.

At step 1505, the consumer pub-sub client connects to the TDF for the stream in response to the command from the SDF. The command, as indicated above, specifies the TDF to which the consumer pub-sub client is to connect and the stream (StreamID) for which the consumer pub-sub client is to connect to the TDF. Here, the PSS layer at the consumer pub-sub client connects to the TDF mid-session without the need to notify the pub-sub applications.

At step 1506, the TDF, if the TDF has not received a message (to set TMID = MID) from an upstream DF for a period of time (a timeout), obtains a streaming position called MAXMID, which is the largest MID sent from the producer pub-sub client for the StreamID. The TDF can retrieve MAXMID from the upstream DF which caches one MAXMID per one StreamID, or the TDF can get MAXMID from the producer pub-sub client directly. The TDF, after obtaining the MAXMID, sets TMID = MAXMID.NEXT. It is noted that, if this timeout condition is not met, the TDF must already have TMID (from step 1503).

At step 1507, the TDF sends a signaling message, to SDF, that the pub-sub client is connected at TMID (which is retrieved from either step 1503 (non-timeout) or step 1506 (timeout)).

At step 1508, the SDF determines the SMID. As noted above, the SDF buffers current messages and the MID of the last message that is sent by the SDF is used as SMID.

At step 1509, the SDF computes a proper handover MID (HMID). The SDF computes the HMID to be the TMID based on a determination that SMID ≤ TMID, or SMID.NEXT otherwise.

At step 1510, the SDF, if any buffered message (as noted above, the SDF has been buffering messages since step 1501) has MID < HMID, sends those buffered messages to the consumer pub-sub client because the TDF does not have those messages. In this manner, regardless of application QoS level, the protocol avoids message loss.

At step 1511, the SDF waits for appropriate acknowledgments for the messages with MID < HMID (those in step 1510) to be received, because if those messages are lost, they cannot be recovered by TDF. For QoS-0, the SDF does not wait for an acknowledgement (e.g., MQTT does not have acknowledgment messages for this QoS level). For QoS-1, the SDF waits for per message acknowledgement (e.g., PUBACK in MQTT). For QoS-2, the SDF waits for a final acknowledgement (e.g., PUBCOMP in MQTT).

At step 1512, the SDF disconnects from the consumer pub-sub client by sending a Disconnect message to the consumer pub-sub client.

At step 1513, the SDF sends a command to the TDF to start streaming to the consumer pub-sub client from HMID. It is noted that the handover protocols have this HMID message boundary to avoid message duplication regardless of application QoS level.

At step 1514, the TDF may decide, in order to save memory space for the buffer, to discard any messages in the buffer that have MID up to HMID.PREV (i.e., up to the message having an MID immediately preceding HMID).

At step 1515, the TDF, in response to the signaling command from the SDF, starts sending messages to the consumer pub-sub client starting from HMID and, at this point, the handover procedure 1500 is finished.

It will be appreciated that various other functions may be performed within the context of the handover procedure 1500 of FIG. 15.

FIG. 16 depicts an example embodiment of a handover procedure for illustrating handover signaling and protocols for seamless handover of a producer data function (producer-DF), supporting a producer pub-sub client using a make-before-break client connectivity mode, from an SDF to a TDF for a particular quality-of-service level (QoS-2) for the SDF-TDF handover and for each of the potential client-DF application QoS levels (QoS-0, QoS-1, QoS-2) for client-DF message delivery.

As illustrated in FIG. 16, various functions of the handover signaling and protocols supported within the context of the handover procedure 1600 are supported by a producer pub-sub client for which a pub-sub session is being migrated, the SDF from which the pub-sub session is being migrated, the TDF to which the pub-sub session is being migrated, downstream DFs between the SDF and the TDF, and the CF associated with the SDF and the TDF. It is noted that a producer-DF handover is expected to involve more steps than a corresponding consumer-DF handover since the producer-DF is connected to the producer pub-sub client and a number of downstream DFs and, thus, there will be additional handshakes with the downstream-DFs (which are not present in the consumer DF-handover). It is further noted that, for the producer-DF handover, the SDF determines handover boundary by looking at appropriate message acknowledgements for different QoS levels and uses this boundary to control when to disconnect from the client, and the producer pub-sub client, after the disconnect, switches message sending to the TDF (instead of to the SDF). The handover procedure 1600 includes the following operational steps.

At step 1601, the CF issues a Redirect command (for handover) to the SDF for the stream of the producer pub-sub client for which the handover is to be performed. The Redirect command includes the client identifier (ClientID) of the producer pub-sub client, the stream identifier (StreamID) of the stream, and an indication of the SDF which is currently being used by the stream for the producer pub-sub client (i.e., source of the handover) and an indication of the TDF to which the stream for the producer pub-sub client is being migrated (i.e., target of the handover). It will be appreciated that the Redirect command may include other information which may be used to support the handover procedure 1600.

At step 1602, the SDF, after receiving the Redirect command from the CF, sends a handover (HO) Request to the TDF. The SDF identifies the TDF, to which to send the HO Request, from the Redirect command received from the CF. The HO Request includes the stream identifier (StreamID) of the stream for which the handover is requested, which is obtained from the Redirect command. The HO Request, in the case of pub-sub message identification, also may include a mapping between MID and cMID.

At step 1603, the SDF sends a command to the producer pub-sub client (specified by the ClientID in the Redirect message received from the CF) to instruct the producer pub-sub client to connect to the TDF for the stream (specified by the StreamID in the Redirect message received from the CF). This command includes the stream identifier (StreamID) of the stream for which the producer pub-sub client is to connect to the TDF, as well as the identifier of the TDF to which the producer pub-sub client is to connect for the handover for the stream.

At step 1604, the SDF sends a command to the downstream DFs to instruct the downstream DFs to connect to the TDF for the stream (specified by the StreamID in the Redirect message received from the CF). This command includes the stream identifier (StreamID) of the stream for which the downstream DFs are to connect to the TDF.

At step 1605, the producer pub-sub client connects to the TDF for the stream in response to the command from the SDF. It is noted that this connection is only to prepare for handover and no data will be sent on the connection yet.

At step 1606, the downstream DFs connect to the TDF for the stream in response to the command from the SDF. It is noted that this connection(s) is only to prepare for handover and no data will be sent on the connection(s) yet.

At step 1607, the TDF, after the producer pub-sub client and the downstream DFs connect to the TDF, reports to the SDF that it is ready for handover. This triggers the SDF to decide on the handover boundary (SMID) depending on the QoS level.

At step 1608, the SDF determines the handover boundary (SMID) depending on the QoS level. For QoS-0, the SMID is the last message received from the producer pub-sub client. For QoS-1, the SMID is the last message for which the SDF sent a per-message acknowledgment back to the producer pub-sub client (e.g., PUBACK in MQTT). For QoS-2, the SMID is the last message for which the SDF sent a final acknowledgment back to the producer pub-sub client (e.g., PUBCOMP in MQTT).

At step 1609, the SDF computes a proper handover MID (HMID). The SDF computes the HMID to be SMID.NEXT.

At step 1610, the SDF informs the TDF of the HMID that can be used for the first message received from the producer pub-sub client. It is noted that the TDF can generate MIDs for the subsequent messages (after HMID) using the MID specification mentioned above.

At step 1611, the SDF disconnects from the producer pub-sub client by sending a Disconnect message to the producer pub-sub client.

At step 1612, the producer pub-sub client, in response to the disconnection by the SDF, switches to sending to the TDF.

At step 1613, the SDF sends messages to downstream DFs until HMID.PREV (i.e., up to the message having an MID immediately preceding HMID) since these messages cannot be recovered by the TDF.

At step 1614, the SDF, before disconnecting from the downstream DFs, ensures that all messages up to and including HMID.PREV have been successfully delivered to the downstream DFs (e.g., the SDF waits for acknowledgments for MID ≤ HMID.PREV) since these messages cannot be recovered by the TDF. Hence, the handover protocols avoid message loss.

At step 1615, the SDF the SDF disconnects from the downstream DFs by sending Disconnect messages to the downstream DFs.

At step 1616, the TDF starts streaming from HMID and, at this point, the SDF has handed over to the TDF.

It will be appreciated that various other functions may be performed within the context of the handover procedure 1600 of FIG. 16.

FIG. 17 depicts an example embodiment of a handover procedure for illustrating handover signaling and protocols for seamless handover of a consumer data function (consumer-DF), supporting a consumer pub-sub client using a break-before-make client connectivity mode, from an SDF to a TDF for a particular quality-of-service level (QoS-2) for the SDF-TDF handover and for each of the potential client-DF application QoS levels (QoS-0, QoS-1, QoS-2) for client-DF message delivery.

As illustrated in FIG. 17, various functions of the handover signaling and protocols supported within the context of the handover procedure 1700 are supported by a consumer pub-sub client for which a pub-sub session is being migrated, the SDF from which the pub-sub session is being migrated, the TDF to which the pub-sub session is being migrated, and the CF associated with the SDF and the TDF. The handover procedure 1700 includes the following operational steps.

At step 1701, the CF issues a Redirect command (for handover) to the SDF for the stream of the consumer pub-sub client for which the handover is to be performed. The Redirect command includes the client identifier (ClientID) of the consumer pub-sub client, the stream identifier (StreamID) of the stream, and an indication of the SDF which is currently being used by the stream for the consumer pub-sub client (i.e., source of the handover) and an indication of the TDF to which the stream for the consumer pub-sub client is being migrated (i.e., target of the handover). It will be appreciated that the Redirect command may include other information which may be used to support the handover procedure 1700. It is noted that, after step 1701, the SDF buffers current messages and the MID of the last message that is sent by the SDF is used as SMID.

At step 1702, the SDF, after receiving the Redirect command from the CF, sends a handover (HO) Request to the TDF. The SDF identifies the TDF, to which to send the HO Request, from the Redirect command received from the CF. The HO Request includes the stream identifier (StreamID) of the stream for which the handover is requested, which is obtained from the Redirect command. The HO Request, in the case of pub-sub message identification, also may include a mapping between MID and cMID.

At step 1703, the TDF, after receiving the HO Request from the SDF, if not already connected to the upstream DF which is handling the stream, connects to the upstream DF which is handling the stream. The TDF identifies the upstream DF which is handling the stream from the stream identifier (StreamID) which is included in the HO Request from the SDF. The TDF, once connected to the upstream DF which is handling the stream, starts buffering messages from MID = TMID. It is noted that, unlike for a make-before-break pub-sub client, the consumer pub-sub client does not need to connect to the TDF at this point.

At step 1704, the TDF, if the TDF has not received a message (to set TMID = MID) from an upstream DF for a period of time (a timeout), obtains a streaming position called MAXMID, which is the largest MID sent from the producer pub-sub client for the StreamID. The TDF can retrieve MAXMID from the upstream DF which caches one MAXMID per one StreamID, or the TDF can get MAXMID from the producer pub-sub client directly. The TDF, after obtaining the MAXMID, sets TMID = MAXMID.NEXT. It is noted that, if this timeout condition is not met, the TDF must already have TMID (from step 1703).

At step 1705, the TDF sends a signaling message, to SDF, to inform the SDF of the TMID.

At step 1706, the SDF determines the SMID. As noted above, the SDF buffers current messages and the MID of the last message that is sent by the SDF is used as SMID.

At step 1707, the SDF computes a proper handover MID (HMID). The SDF computes the HMID to be the TMID based on a determination that SMID ≤ TMID, or SMID.NEXT otherwise.

At step 1708, the SDF, if any buffered message (as noted above, the SDF has been buffering messages since step 1701) has MID < HMID.PREV (i.e., up to the message having an MID immediately preceding HMID), sends those buffered messages to the consumer pub-sub client because the TDF does not have those messages. In this manner, regardless of application QoS level, the protocol avoids message loss.

At step 1709, the SDF waits for appropriate acknowledgments for the messages with MID < HMID (those in step 1708) to be received, because if those messages are lost, they cannot be recovered by TDF. For QoS-0, the SDF does not wait for an acknowledgement (e.g., MQTT does not have acknowledgment messages for this QoS level). For QoS-1, the SDF waits for per message acknowledgement (e.g., PUBACK in MQTT). For QoS-2, the SDF waits for a final acknowledgement (e.g., PUBCOMP in MQTT).

At step 1710, the SDF informs the consumer pub-sub client of the address of the TDF for use by the consumer pub-sub client to connect to the TDF.

At step 1711, the SDF informs the TDF of the HMID of the message that the TDF is to send to the consumer pub-sub client after the consumer pub-sub client has been connected to the TDF.

At step 1712, the SDF disconnects from the consumer pub-sub client by sending a Disconnect message to the consumer pub-sub client.

At step 1713, the consumer pub-sub client, in response to the Disconnect message from the SDF, connects to the TDF by sending a Connection message to the TDF using the address of the TDF received from the SDF.

At step 1714, the TDF, in response to the Connect message from the consumer pub-sub client, starts sending messages to the consumer pub-sub client starting from HMID and, at this point, the handover procedure 1700 is finished.

It will be appreciated that various other functions may be performed within the context of the handover procedure 1700 of FIG. 17.

FIG. 18 depicts an example embodiment of a handover procedure for illustrating handover signaling and protocols for seamless handover of a producer data function (producer-DF), supporting a producer pub-sub client using a break-before-make client connectivity mode, from an SDF to a TDF for a particular quality-of-service level (QoS-2) for the SDF-TDF handover and for each of the potential client-DF application QoS levels (QoS-0, QoS-1, QoS-2) for client-DF message delivery.

As illustrated in FIG. 18, various functions of the handover signaling and protocols supported within the context of the handover procedure 1800 are supported by a producer pub-sub client for which a pub-sub session is being migrated, the SDF from which the pub-sub session is being migrated, the TDF to which the pub-sub session is being migrated, downstream DFs between the SDF and the TDF, and the CF associated with the SDF and the TDF. It is noted that a producer-DF handover is expected to involve more steps than a corresponding consumer-DF handover since the producer-DF is connected to the producer pub-sub client and a number of downstream DFs and, thus, there will be additional handshakes with the downstream-DFs (which are not present in the consumer DF-handover). The handover procedure 1800 includes the following operational steps.

At step 1801, the CF issues a Redirect command (for handover) to the SDF for the stream of the producer pub-sub client for which the handover is to be performed. The Redirect command includes the client identifier (ClientID) of the producer pub-sub client, the stream identifier (StreamID) of the stream, and an indication of the SDF which is currently being used by the stream for the producer pub-sub client (i.e., source of the handover) and an indication of the TDF to which the stream for the producer pub-sub client is being migrated (i.e., target of the handover). It will be appreciated that the Redirect command may include other information which may be used to support the handover procedure 1800.

At step 1802, the SDF, after receiving the Redirect command from the CF, sends a handover (HO) Request to the TDF. The SDF identifies the TDF, to which to send the HO Request, from the Redirect command received from the CF. The HO Request includes the stream identifier (StreamID) of the stream for which the handover is requested, which is obtained from the Redirect command. The HO Request, in the case of pub-sub message identification, also may include a mapping between MID and cMID.

At step 1803, the SDF sends a command to the downstream DFs to instruct the downstream DFs to connect to the TDF for the stream (specified by the StreamID in the Redirect message received from the CF). This command includes the stream identifier (StreamID) of the stream for which the downstream DFs are to connect to the TDF.

At step 1804, the downstream DFs connect to the TDF for the stream in response to the command from the SDF. It is noted that this connection(s) is only to prepare for handover and no data will be sent on the connection(s) yet.

At step 1805, the SDF determines the handover boundary (SMID) depending on the QoS level. For QoS-0, the SMID is the last message received from the producer pub-sub client. For QoS-1, the SMID is the last message for which the SDF sent a per-message acknowledgment back to the producer pub-sub client (e.g., PUBACK in MQTT). For QoS-2, the SMID is the last message for which the SDF sent a final acknowledgment back to the producer pub-sub client (e.g., PUBCOMP in MQTT).

At step 1806, the SDF informs the producer pub-sub client of the address of the TDF for the handover.

At step 1807, the SDF computes a proper handover MID (HMID). The SDF computes the HMID to be SMID.NEXT.

At step 1808, the SDF disconnects from the producer pub-sub client by sending a Disconnect message to the producer pub-sub client.

At step 1809, the producer pub-sub client, in response to the disconnect from the SDF, connects to the TDF using the address of the TDF provided to the producer pub-sub client.

At step 1810, the SDF informs the TDF of the HMID that can be used for the first message received from the producer pub-sub client. It is noted that the TDF can generate MIDs for the subsequent messages (after HMID) using the MID specification mentioned above. The TDF starts buffering messages from HMID.

At step 1811, the SDF sends messages to downstream DFs until HMID.PREV (i.e., up to the message having an MID immediately preceding HMID) since these messages cannot be recovered by the TDF.

At step 1812, the SDF, before disconnecting from the downstream DFs, ensures that all messages up to and including HMID.PREV have been successfully delivered to the downstream DFs (e.g., the SDF waits for acknowledgments for MID ≤ HMID.PREV) since these messages cannot be recovered by the TDF. Hence, the handover protocols avoid message loss.

At step 1813, the SDF disconnects from the downstream DFs by sending Disconnect messages to the downstream DFs.

At step 1814, the TDF starts streaming from HMID and, at this point, the SDF has handed over to the TDF.

It will be appreciated that various other functions may be performed within the context of the handover procedure 1800 of FIG. 18.

It will be appreciated that, in FIGs. 15-18, the handover protocol provides QoS-2 at best effort. For example, MQTT may lose some messages because of client-DF QoS-0, but, during the handover, the protocol prevents message loss and message duplicationeach message not lost by MQTT will arrive at either SDF or TDF.

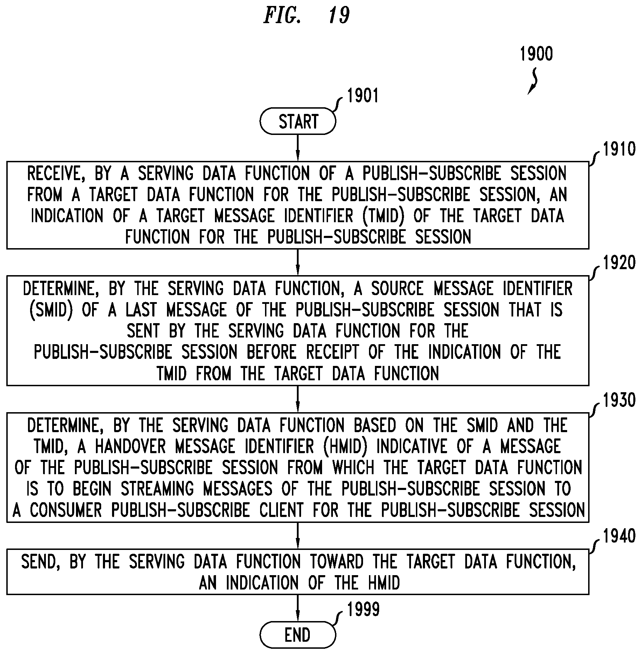

FIG. 19 depicts an example embodiment of a method for use by an SDF to support handover of a consumer pub-sub client from the SDF to a TDF. It will be appreciated that, although primarily presented herein as being performed serially, at least a portion of the functions of the method 1900 may be performed contemporaneously or in a different order than as presented with respect to FIG. 19. At block 1901, the method 1900 begins. At block 1910, receive, by an SDF of a pub-sub session from a TDF for the pub-sub session, an indication of a target message identifier (TMID) of the TDF for the pub-sub session. At block 1920, determine, by the SDF, a source message identifier (SMID) of a last message of the pub-sub session that is sent by the SDF for the pub-sub session before receipt of the indication of the TMID from the TDF. At block 1930, determine, by the SDF based on the SMID and the TMID, a handover message identifier (HMID) indicative of a message of the pub-sub session from which the TDF is to begin streaming messages of the pub-sub session to a consumer pub-sub client for the pub-sub session. At block 1940, send, by the SDF toward the TDF, an indication of the HMID. At block 1999, the method 1900 ends. The method 1900 may further include features of receive, by the SDF from a control function, a redirection message configured to request a handover of the pub-sub session from the SDF to the target TDF, and send, by the SDF toward the TDF based on the redirection message, a handover request identifying the pub-sub session. The method 1900, to determine the HMID, may further include features of set the HMID equal to the TMID based on a determination that the SMID is less than or equal to the TMID or set the HMID equal to a message identifier immediately following the SMID based on a determination that the SMID is greater than the TMID. The method 1900 may further include features of send, by the SDF toward the consumer pub-sub client, any messages buffered by the SDF up until a message identifier immediately preceding HMID. The method 1900 may further include features of send, by the SDF toward the consumer pub-sub client based on receipt of a redirection message configured to request a handover of the pub-sub session from the SDF to the TDF, an instruction for the consumer pub-sub client to connect to the TDF for the pub-sub session, and send, by the SDF toward the consumer pub-sub client before sending of the HMID toward the TDF, a message for causing disconnection of the consumer pub-sub client from the SDF. The method 1900 may further include features of send, by the SDF toward the consumer pub-sub client, an indication of an address of the TDF, and send, by the SDF toward the consumer pub-sub client after sending of the HMID toward the TDF, a message for causing disconnection of the consumer pub-sub client from the SDF. The method 1900 may further include a feature of determine, by the SDF based on a QoS level of the pub-sub session, whether to wait for acknowledgement of messages sent by the SDF toward the consumer pub-sub client before sending a disconnect message to the consumer pub-sub client. The method 1900 may further include features of perform, based on a determination that the QoS level of the pub-sub session is QoS-0: send, by the SDF toward the consumer pub-sub client without waiting for acknowledgement of messages sent by the SDF toward the consumer pub-sub client, the disconnect message. The method 1900 may further include features of perform, based on a determination that the QoS level of the pub-sub session is QoS-1 or QoS-2: monitor for acknowledgment of messages sent by the SDF toward the consumer pub-sub client that have message identifiers less than HMID and send, by the SDF toward the consumer pub-sub client based on a determination of completion of acknowledgement of messages sent by the SDF toward the consumer pub-sub client that have message identifiers less than HMID, the disconnect message. The acknowledgement of messages sent by the SDF toward the consumer pub-sub client may include per-message acknowledgment for QoS-1 or a final acknowledgment for QoS-2. It will be appreciated that various other aspects of handover signaling and protocols presented herein may be incorporated within the context of the method 1900 of FIG. 19.

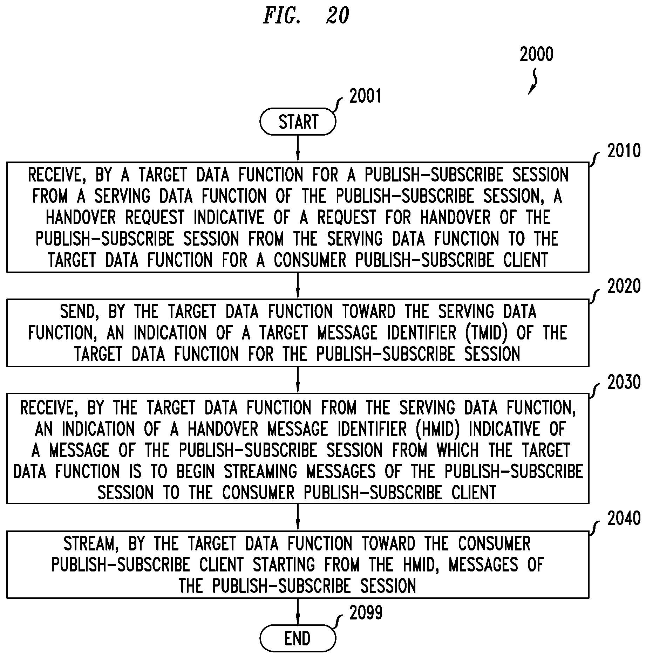

FIG. 20 depicts an example embodiment of a method for use by a TDF to support handover of a consumer pub-sub client from an SDF to the TDF. It will be appreciated that, although primarily presented herein as being performed serially, at least a portion of the functions of the method 2000 may be performed contemporaneously or in a different order than as presented with respect to FIG. 20. At block 2001, the method 2000 begins. At block 2010, receive, by a TDF for a pub-sub session from an SDF of the pub-sub session, a handover request indicative of a request for handover of the pub-sub session from the SDF to the TDF for a consumer pub-sub client. At block 2020, send, by the TDF toward the SDF, an indication of a target message identifier (TMID) of the TDF for the pub-sub session. At block 2030, receive, by the TDF from the SDF, an indication of a handover message identifier (HMID) indicative of a message of the pub-sub session from which the TDF is to begin streaming messages of the pub-sub session to the consumer pub-sub client. At block 2040, stream, by the TDF toward the consumer pub-sub client starting from the HMID, messages of the pub-sub session. At block 2099, the method 2000 ends. The method 2000 may further include the feature of set, by the TDF, the TMID equal to a message identifier of a first message of the pub-sub session that is buffered by the TDF for the pub-sub session. The method 2000 may further include the feature of compute, by the TDF based on a determination that a message of the pub-sub session has not been received by the TDF since receipt of the handover request, the TMID as a message identifier immediately following a maximum message identifier which is a largest message identifier sent from a producer pub-sub client of the pub-sub session for the pub-sub session. The method 2000 may further include that the maximum message identifier is determined from the producer pub-sub client of the pub-sub session or an upstream DF for the pub-sub session. The method 2000 may further include that the indication of the HMID is received as part of a request by the SDF for the TDF to begin streaming messages of the pub-sub session to the consumer pub-sub client starting from the HMID. The method 2000 may further include the feature of buffer, by the TDF starting from TMID, messages of the pub-sub session. The method 2000 may further include the feature of connect, by the TDF based on a determination that the TDF is not connected to an upstream DF for the pub-sub session, to the upstream DF for the pub-sub session. The method 2000 may further include features of receive, by the TDF from the consumer pub-sub client before receipt of the indication of the HMID, a request by the consumer pub-sub client to connect to the TDF for the pub-sub session, and discard, by the TDF from a buffer maintained by the TDF for the pub-sub session, any messages having respective message identifiers up to and including a message having a message identifier immediately preceding the HMID. The method 2000 may further include the features of receive, by the TDF from the consumer pub-sub client after receipt of the indication of the HMID, a request by the consumer pub-sub client to connect to the TDF for the pub-sub session, and start, by the TDF based on the request by the consumer pub-sub client to connect to the TDF for the pub-sub session, streaming of the messages of the pub-sub session starting from the HMID. It will be appreciated that various other aspects of handover signaling and protocols presented herein may be incorporated within the context of the method 2000 of FIG. 20.

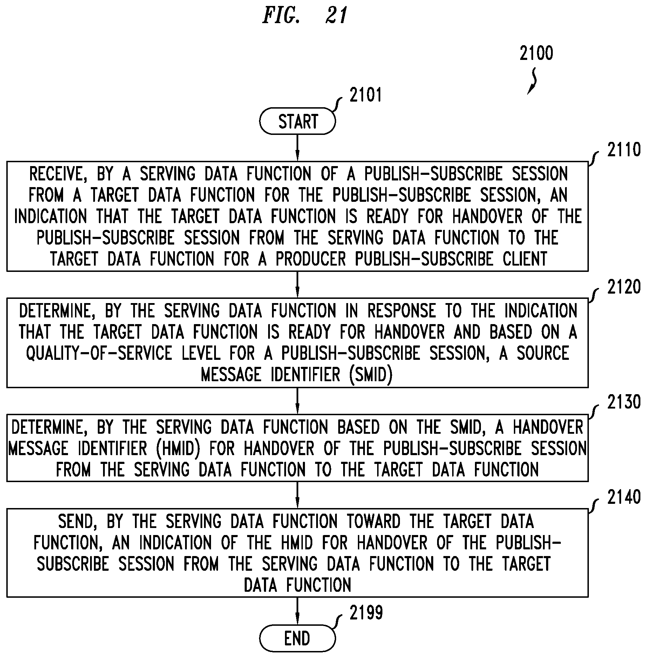

FIG. 21 depicts an example embodiment of a method for use by an SDF to support handover of a producer pub-sub client from the SDF to a TDF. It will be appreciated that, although primarily presented herein as being performed serially, at least a portion of the functions of the method 2100 may be performed contemporaneously or in a different order than as presented with respect to FIG. 21. At block 2101, the method 2100 begins. At block 2110, receive, by an SDF of a pub-sub session from a TDF for the pub-sub session, an indication that the TDF is ready for handover of the pub-sub session from the SDF to the TDF for a producer pub-sub client. At block 2120, determine, by the SDF in response to the indication that the TDF is ready for handover and based on a QoS level for the pub-sub session, a source message identifier (SMID). At block 2130, determine, by the SDF based on the SMID, a handover message identifier (HMID) for handover of the pub-sub session from the SDF to the TDF. At block 2140, send, from the SDF toward the TDF, an indication of the HMID for handover of the pub-sub session from the SDF to the TDF. At block 2199, the method 2100 ends. The method 2100 may further include the features of receive, by the SDF from a CF, a redirection message configured to request a handover of the pub-sub session from the SDF to the TDF, and send, by the SDF toward the TDF based on the redirection message, a handover request identifying the pub-sub session. The method 2100 may further include the features of receive, by the SDF from a CF, a redirection message configured to request a handover of the pub-sub session from the SDF to the TDF, send, by the SDF toward the producer pub-sub client based on the redirection message, an instruction for the producer pub-sub client to connect to the TDF for the pub-sub session, and send, by the SDF toward a downstream DF based on the redirection message, an instruction for the downstream DF to connect to the TDF for the pub-sub session. The method 2100 may further include the features of receive, by the SDF from a CF, a redirection message configured to request a handover of the pub-sub session from the SDF to the TDF, and send, by the SDF toward a downstream DF based on the redirection message, an instruction for the downstream DF to connect to the TDF for the pub-sub session. The method 2100 may further include the features of set, by the SDF based on a determination that the QoS level for the pub-sub session is QoS-0, the SMID to a message identifier of a last message received by the SDF before the indication that the TDF is ready for handover is received by the SDF. The method 2100 may further include the feature of set, by the SDF based on a determination that the QoS level for the pub-sub session is QoS-1, the SMID to a message identifier of a last message received by the SDF before the indication that the TDF is ready for handover is received by the SDF and for which the SDF sent a per-message acknowledgment to the producer pub-sub client. The method 2100 may further include the feature of set, by the SDF based on a determination that the QoS level for the publish-subscribe session is QoS-2, the SMID to a message identifier of a last message received by the SDF before the indication that the TDF is ready for handover is received by the SDF and for which the SDF sent a final acknowledgment to the producer pub-sub client. The method 2100, to determine the HMID for handover of the pub-sub session from the SDF to the TDF, may further include the feature of set, by the SDF, the HMID equal to a message identifier immediately following the SMID. The method 2100, to send the indication of the HMID for handover of the pub-sub session from the SDF to the TDF, may further include the feature of send, by the SDF toward the TDF, an instruction for the TDF to start using the HMID for a first message received by the TDF from the producer pub-sub client. The method 2100 may further include the feature of send, by the SDF toward the one or more downstream DFs, any messages of the pub-sub session buffered by the SDF up until a message identifier immediately preceding HMID. The method 2100 may further include the feature of disconnect, by the SDF based on a determination that the SDF has received acknowledgements from the downstream DFs for any messages having message identifiers up until a message identifier immediately preceding HMID, from a set of downstream DFs. It will be appreciated that various other aspects of handover signaling and protocols presented herein may be incorporated within the context of the method 2100 of FIG. 21.

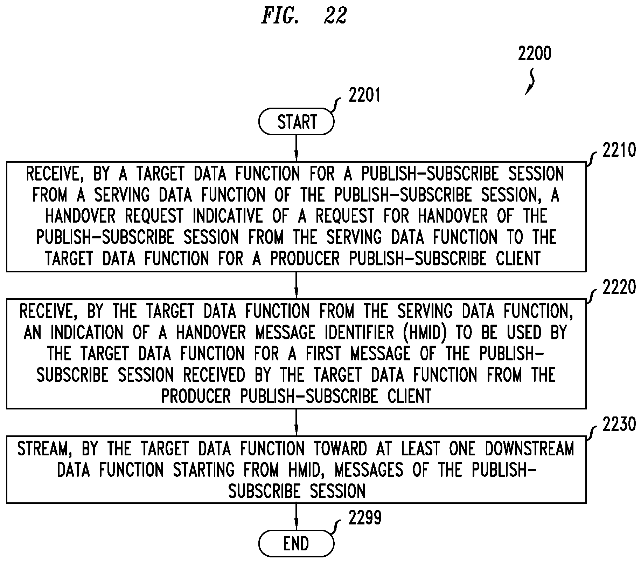

FIG. 22 depicts an example embodiment of a method for use by a TDF to support handover of a producer pub-sub client from an SDF to the TDF. It will be appreciated that, although primarily presented herein as being performed serially, at least a portion of the functions of the method 2200 may be performed contemporaneously or in a different order than as presented with respect to FIG. 22. At block 2201, the method 2200 begins. At block 2210, receive, by a TDF for a pub-sub session from an SDF of the pub-sub session, a handover request indicative of a request for handover of the pub-sub session from the SDF to the TDF for a producer pub-sub client. At block 2220, receive, by the TDF from the SDF, an indication of a handover message identifier (HMID) to be used by the TDF for a first message of the pub-sub session received by the TDF from the producer pub-sub client. At block 2230, stream, by the TDF toward at least one downstream DF starting from HMID, messages of the pub-sub session. At block 2299, the method 2200 ends. The method 2200 may further include the feature of buffer, by the target data function starting from HMID, messages of the publish-subscribe session. The method 2200 may further include the feature of the target data function being configured to support handover of the publish-subscribe session from the serving data function to the target data function based on a make-before-break procedure. The method 2200 may further include the features of receive, by the target data function from the producer publish-subscribe client, a request by the producer publish-subscribe client to connect to the target data function for the publish-subscribe session, receive, by the target data function from each of the at least one downstream data function, a respective request by the at least one downstream data function to connect to the target data function for the publish-subscribe session, and send, by the target data function toward the serving data function, an indication that the target data function is ready for handover of the publish-subscribe session from the serving data function to the target data function. The method 2200 may further include the feature of receive, by the target data function from the producer publish-subscribe client after receipt of the indication of the HMID, a request by the producer publish-subscribe client to switch from sending messages of the publish-subscribe session to the serving data function to sending messages of the publish-subscribe session to the target data function. The method 2200 may further include the feature of the target data function being configured to support handover of the publish-subscribe session from the serving data function to the target data function based on a break-before-make procedure. The method 2200 may further include the features of receive, by the target data function from each of the at least one downstream data function, a respective request by the at least one downstream data function to connect to the target data function for the publish-subscribe session and receive, by the target data function from the producer publish-subscribe client before receipt of the indication of the HMID, a request by the producer publish-subscribe client to connect to the target data function for the publish-subscribe session. It will be appreciated that various other aspects of handover signaling and protocols presented herein may be incorporated within the context of the method 2200 of FIG. 22.

It will be appreciated that various example embodiments for supporting seamless handover of pub-sub sessions based on handover signal capabilities in which each of the three QoS levels are handled together for consumer pub-sub clients and producer pub-sub clients based on whether the pub-sub clients are make-before-break pub-sub clients or break-before-make pub-sub clients (e.g., example embodiments presented with respect to FIGs. 11 - 18) may be provided in various other ways.

Various example embodiments for supporting seamless handovers in PSaaS may provide various advantages or potential advantages. For example, various example embodiments for supporting seamless handovers in PSaaS may be configured to leverage a tree structure of pub-sub networks to handover consumer-DFs (leaf nodes) or producer-DFs (root node) of the tree. For example, various example embodiments for supporting seamless handovers in PSaaS may be configured to leverage pub-sub distribution trees, thereby allowing a pub-sub client to connect to both the SDF and the TDF during handover without any tunneling between them, and the SDF, pub-sub client, and TDF coordinate handover through lightweight protocol message exchange. For example, various example embodiments for supporting seamless handovers in PSaaS may be configured to support handovers based on on-demand operations through lightweight protocol message exchanges, without pre-loading or pre-fetching the contents on target servers. For example, various example embodiments for supporting seamless handovers in PSaaS may be configured to support handover without any storage complexity and while only relying on lightweight protocol handshake and data exchange. It will be appreciated that various example embodiments for supporting seamless handovers in PSaaS may provide various other advantages or potential advantages.

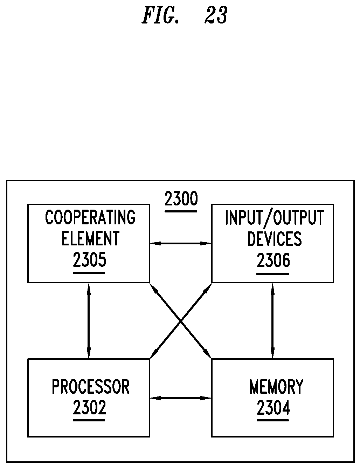

FIG. 23 depicts an example embodiment of a computer suitable for use in performing various functions presented herein.

The computer 2300 includes a processor 2302 (e.g., a central processing unit (CPU), a graphics processing unit (GPU), a network processing unit (NPU), a processor, a processor having a set of processor cores, a processor core of a processor, or the like) and a memory 2304 (e.g., a random access memory (RAM), a read-only memory (ROM), or the like). In at least some example embodiments, the computer 2300 may include at least one processor and at least one memory storing instructions that, when executed by the at least one processor, cause the computer to perform various functions presented herein.

The computer 2300 also may include a cooperating element 2305. The cooperating element 2305 may be a hardware device. The cooperating element 2305 may be a process that can be loaded into the memory 2304 and executed by the processor 2302 to implement various functions presented herein (in which case, for example, the cooperating element 2305 (including associated data structures) can be stored on a non-transitory computer readable medium, such as a storage device or other suitable type of storage element (e.g., a magnetic drive, an optical drive, or the like)).

The computer 2300 also may include one or more input/output devices 2306. The input/output devices 2306 may include one or more of a user input device (e.g., a keyboard, a keypad, a mouse, a microphone, a camera, or the like), a user output device (e.g., a display, a speaker, or the like), one or more network communication devices or elements (e.g., an input port, an output port, a receiver, a transmitter, a transceiver, or the like), one or more storage devices (e.g., a tape drive, a floppy drive, a hard disk drive, a compact disk drive, or the like), or the like, as well as various combinations thereof.

It will be appreciated that computer 2300 may represent a general architecture and functionality suitable for implementing functional elements described herein, portions of functional elements described herein, or the like, as well as various combinations thereof. For example, the computer 2300 may provide a general architecture and functionality that is suitable for implementing one or more elements presented herein. For example, the computer 2000 may provide a general architecture and functionality that is suitable for implementing at least one of a pub-sub client or a portion thereof, a CF or a portion thereof, a DF or a portion thereof, a combination of a CF and a DF, or the like, as well as various combinations thereof.

It will be appreciated that at least some of the functions presented herein may be implemented in software (e.g., via implementation of software on one or more processors, for executing on a general purpose computer (e.g., via execution by one or more processors) so as to provide a special purpose computer, and the like) and/or may be implemented in hardware (e.g., using a general purpose computer, one or more application specific integrated circuits, and/or any other hardware equivalents).

It will be appreciated that at least some of the functions presented herein may be implemented within hardware, for example, as circuitry that cooperates with the processor to perform various functions. Portions of the functions/elements described herein may be implemented as a computer program product wherein computer instructions, when processed by a computer, adapt the operation of the computer such that the methods and/or techniques described herein are invoked or otherwise provided. Instructions for invoking the various methods may be stored in fixed or removable media (e.g., non-transitory computer readable media), transmitted via a data stream in a broadcast or other signal bearing medium, and/or stored within a memory within a computing device operating according to the instructions.

It will be appreciated that the term "non-transitory" as used herein is a limitation of the medium itself (i.e., tangible, not a signal) as opposed to a limitation of data storage persistency (e.g., RAM versus ROM).

It will be appreciated that, as used herein, "at least one of <a list of two or more elements>" and "at least one of the following: <a list of two or more elements>" and similar wording, where the list of two or more elements are joined by "and" or "or", mean at least any one of the elements, or at least any two or more of the elements, or at least all the elements.

It will be appreciated that, as used herein, the term "or" refers to a non-exclusive "or" unless otherwise indicated (e.g., use of "or else" or "or in the alternative").

It will be appreciated that, although various embodiments which incorporate the teachings presented herein have been shown and described in detail herein, those skilled in the art can readily devise many other varied embodiments that still incorporate these teachings.

## Claims

1. An apparatus (2300), comprising:
means for receiving (2210), by a target data function (222-5) for a publish-subscribe session from a serving data function (222-4) of the publish-subscribe session, a handover request indicative of a request for handover of the publish-subscribe session from the serving data function (222-4)_to the target data function (222-5) for a producer publish-subscribe client (210-P);
means for receiving (2220), by the target data function (222-5) from the serving data function (222-4), an indication of a handover message identifier (HMID) to be used by the target data function (222-5) for a first message of the publish-subscribe session received by the target data function (222-5) from the producer publish-subscribe client (210-P); and
means for streaming (2230), by the target data function (222-5) toward at least one downstream data function starting from HMID, messages of the publish-subscribe session.

2. The apparatus (2300) according to claim 1,further comprising:
means for buffering, by the target data function (222-5) starting from HMID, messages of the publish-subscribe session.

3. The apparatus (2300) according to any of claims 1 to 2,further comprising:
means for receiving, by the target data function (222-5) from the producer publish-subscribe client (210-P), a request by the producer publish-subscribe client (210-P) to connect to the target data function (222-5) for the publish-subscribe session; and
means for receiving, by the target data function (222-5) from each of the at least one downstream data function, a respective request by the at least one downstream data function to connect to the target data function (222-5) for the publish-subscribe session.

4. The apparatus (2300) according to claim 3, further comprising:
means for sending, by the target data function (222-5) toward the serving data function (222-4), an indication that the target data function (222-5) is ready for handover of the publish-subscribe session from the serving data function (222-4)_to the target data function (222-5).

5. The apparatus (2300) according to claim 4, further comprising:
means for receiving, by the target data function (222-5) from the producer publish-subscribe client (210-P) after receipt of the indication of the HMID, a request by the producer publish-subscribe client (210-P) to switch from sending messages of the publish-subscribe session to the serving data function (222-4)_to sending messages of the publish-subscribe session to the target data function.

6. The apparatus (2300) according to any of claims 1 to 2, further comprising:
means for receiving, by the target data function (222-5) from each of the at least one downstream data function, a respective request by the at least one downstream data function to connect to the target data function for the publish-subscribe session.

7. The apparatus (2300) according to claim 6, further comprising:
means for receiving, by the target data function (222-5) from the producer publish-subscribe client (210-P) before receipt of the indication of the HMID, a request by the producer publish-subscribe client (210-P) to connect to the target data function for the publish-subscribe session.

8. A computer-readable storage medium (2304) storing computer program instructions which, when executed by an apparatus (2300), cause the apparatus (2300) at least to:
receive (2210), by a target data function for a publish-subscribe session from a serving data function (222-4)_of the publish-subscribe session, a handover request indicative of a request for handover of the publish-subscribe session from the serving data function (222-4)_to the target data function (222-5) for a producer publish-subscribe client (210-P);
receive (2220), by the target data function from the serving data function (222-4)_, an indication of a handover message identifier (HMID) to be used by the target data function (222-5) for a first message of the publish-subscribe session received by the target data function (222-5) from the producer publish-subscribe client (210-P); and
stream (2230), by the target data function (222-5) toward at least one downstream data function starting from HMID, messages of the publish-subscribe session.

9. A method (2200), comprising:
receiving (2210), by a target data function (222-5) for a publish-subscribe session from a serving data function (222-4)_of the publish-subscribe session, a handover request indicative of a request for handover of the publish-subscribe session from the serving data function (222-4)_to the target data function (222-5) for a producer publish-subscribe client (210-P);
receiving (2220), by the target data function (222-5) from the serving data function (222-4)_, an indication of a handover message identifier (HMID) to be used by the target data function (222-5) for a first message of the publish-subscribe session received by the target data function (222-5) from the producer publish-subscribe client (210-P); and
streaming (2230), by the target data function (222-5) toward at least one downstream data function starting from HMID, messages of the publish-subscribe session.

10. The method (2200) according to claim 9, further comprising:
buffering, by the target data function (222-5) starting from HMID, messages of the publish-subscribe session.

11. The method (2200) according to any of claims 9 to 10, further comprising:
receiving, by the target data function (222-5) from the producer publish-subscribe client (210-P), a request by the producer publish-subscribe client (210-P) to connect to the target data function (222-5) for the publish-subscribe session; and
receiving, by the target data function (222-5) from each of the at least one downstream data function, a respective request by the at least one downstream data function to connect to the target data function (222-5) for the publish-subscribe session.

12. The method (2200) according to claim 11, further comprising:
sending, by the target data function (222-5) toward the serving data function (222-4), an indication that the target data function (222-5) is ready for handover of the publish-subscribe session from the serving data function (222-4)_to the target data function (222-5).

13. The method (2200) according to claim 12, further comprising:
receiving, by the target data function (222-5) from the producer publish-subscribe client (210-P) after receipt of the indication of the HMID, a request by the producer publish-subscribe client (210-P) to switch from sending messages of the publish-subscribe session to the serving data function (222-4)_to sending messages of the publish-subscribe session to the target data function (222-5).

14. The method (2200) according to any of claims 9 to 10, further comprising:
receiving, by the target data function (222-5) from each of the at least one downstream data function, a respective request by the at least one downstream data function to connect to the target data function (222-5) for the publish-subscribe session.

15. The method (2200) according to claim 14, further comprising:
receiving, by the target data function (222-5) from the producer publish-subscribe client (210-P) before receipt of the indication of the HMID, a request by the producer publish-subscribe client (210-P) to connect to the target data function (222-5) for the publish-subscribe session.
